# EUROPEAN PATENT APPLICATION

(11) **EP 1 548 732 A2**
(43) Date of publication of application: **29.06.2005**
(21) Application number: 04257174.5
(22) Date of filing: 19.11.2004
(51) Int. Cl.: G11B 20/00, G11B 20/10

(54) **Method and apparatus for processing information, information storage medium, and computer program**

(30) Priority: 24.12.2003 JP 2003427896
(71) Applicant: SONY CORPORATION, Tokyo 141 (JP)
(72) Inventor: Takashima, Yoshikazu Sony Corporation, Tokyo (JP); Kitani, Satoshi Sony Corporation, Tokyo (JP); Asano, Tomoyuki Sony Corporation, Tokyo (JP); Ueda, Kenjiro Sony Corporation, Tokyo (JP); Muramatsu, Katsumi Sony Corporation, Tokyo (JP)
(74) Representative: Horner, David Richard

(57) **Abstract**

A content stored in an information recording medium is managed on a per unit basis and protected from unauthorized use. The content stored in the information recording medium is divided into units, and the content is encrypted with a unit key generated for each unit. A unit key generation key is generated based on a variety of key generation information. The unit key for each unit is generated by applying a record seed corresponding to each unit to the unit key generation key. For example, a block key is generated based on the unit key and a block seed per block unit set for every 3 sectors. An encryption process is performed on a per block unit basis using the block key. During decryption, the decrypting of the content is permitted conditional on the matching in the key generation information, the record seed, and the block seed stored in a disk. Unauthorized use of the content is thus prevented.

## Description

### BACKGROUND OF THE INVENTION

### 1. Field of the Invention

The present invention relates to an information processing method, an information processing apparatus, an information recording medium, and a computer program. More specifically, the present invention relates to an information processing method, an information processing apparatus, an information recording medium, and a computer program for preventing an unauthorized use of a content stored in an information recording medium, such as unauthorized copying of the content from the information recording medium.

### 2. Description of the Related Art

A variety of software data including audio data, such as music, image data, such as movies, game playing software programs, and a variety of application programs (hereafter referred to as contents) is stored, as digital data, in a recording medium, such as a blu-ray disk using a blue laser, a digital versatile disk (DVD), mini disk (MD), or compact disk (CD). In particular, the blu-ray disk using a blue laser permits high-density recording, thereby recording high-quality image data such as a video content having a large amount of information.

Digital contents, stored in these information recording media, are provided to users. Each user plays and uses the content on a replay device, such as a personal computer (PC), a disk player, or the like.

The distributorship of the majority of contents of the music data and the image data is typically held by a producer or a seller of the contents. A certain limitation is imposed on the distribution of the contents, in other words, an authorized user only has the right to use the corresponding content, and unauthorized copying of a content is typically inhibited.

Digital recording apparatuses and recording media are currently in widespread use. A digital recording apparatus and a digital recording medium allow a movie or audio to be repeatedly recorded or replayed without any quality drop involved. Unauthorized copied contents are distributed over the internet, contents copied on a CD-R, so-called pirated disk, are distributed, and unauthorized copied contents stored on a hard disk in a computer are used. Use of unauthorized copied contents becomes a concern.

A large capacity recording medium, such as a DVD or a recently developed recording media using a blue laser, can digitally record a large amount of data as large as a single movie to several movies in one piece of media. To protect copyright of a content from unauthorized copying becomes more and more important considering that video information is easily recorded as digital information. A variety of techniques for protecting digital data from unauthorized copying is incorporated in a digital recording apparatus and a recording medium.

For example, the content scramble system (CSS) is used in DVD disk players. In the content scramble system, video data or audio data is recorded on a DVD-ROM (read only memory) in the encrypted form thereof. A key for decrypting the encrypted data is provided to a licensed DVD player only. A license is given to a DVD player that is designed to follow an operation rule in which no authorized copying is performed. The licensed DVD player decrypts the encrypted data on the DVD-ROM using a given key, thereby replaying an image or sound from the DVD-ROM.

Since unlicensed DVD players hold no key for decrypting the data, the encrypted data recorded on the DVD-ROM cannot be decrypted. In the content scramble system, any DVD player failing to satisfy licensing requirements can neither record digital data onto the DVD-ROM nor replay digital data from the DVD-ROM.

With data communication networks in widespread use, home networks are introduced. In home networks, home electric appliances, computers, and peripheral devices thereof are networked to establish communication therebetween. Data processing function is shared among home electronics when communication is established between networked apparatuses. Contents are exchanged between apparatuses. With home networking expected to grow further, users enjoy convenience and comfort in content communication.

In the network environment, a content stored in the information recording medium can be more frequently accessed from an apparatus connected to the network. In principle, known copy protection systems permit only a single licensed replay device to play the content. For example, a networked apparatus, such as a PC or a TV, attempts to access an apparatus having a recording medium loaded therewithin, such as a home server or player, to replay a content via the network. The known copy protection system fails to take into consideration such an application.

In conventional applications, a single content stored in a recording medium is used on a single replay device, and it was conventionally sufficient to manage the use of contents with a content use right, such as licensing, provided for each content or each replay device. As the information recording medium becomes large in capacity, home electronic appliances go digital, and networking advances, and a need for a mechanism of content use management different from the conventional mechanism arises. More specifically, the following needs arise: 1) a usage management structure that permits a plurality of contents to be recorded on a recording medium with usage managements different from content to content enabled, 2) a usage management structure that permits a content to be used in a particular network, such as a home network, i.e., permits a content to be played on a networked apparatus, and causes a home server to permit a content to be copied, 3) a usage management structure that safely distributes, to a particular user, information required for playing a content via the network, such as a key required to decrypt the content.

### SUMMARY OF THE INVENTION

Embodiments of the present invention provide an information processing apparatus, an information processing method, an information recording medium, and a computer program for performing copyright management and usage management on a per data segment basis on a variety of contents stored in a memory.

According to a first aspect of the present invention, an information processing apparatus for replaying a content, includes a crypto processor for performing a decryption process for decrypting an encrypted content containing at least one content management unit stored in an information recording medium. The crypto processor generates a unit key generation key commonly applied to at least one content management unit in accordance with key generation information stored in the information recording medium, generates a unit key corresponding to a content management unit that is encrypted in a crypto process based on the unit key generation key and a record seed corresponding to the unit-based content management unit stored in the information recording medium, and performs the decryption process on the encrypted content using one of the generated unit key and a block key that is generated based on the unit key.

Preferably, the image processing apparatus further includes a memory for storing a device key provided in a tree-structured key distribution method, and the crypto processor acquires the key generation information by performing the decryption process on an encryption key block stored in the information recording medium using the device key.

Preferably, the image processing apparatus acquires the key generation information by performing a read process for reading a physical index, recorded onto the information recording medium, using a method different from a replay method of replaying the encrypted content recorded in the information recording medium.

Preferably, the image processing apparatus performs the read process for reading the physical index recorded as a wobble recording signal.

Preferably, the crypto processor extracts, as a block seed, a portion of user data forming the block as an encryption process unit of contents, generates a block key in a crypto process that applies the unit key to the block seed, and performs the decryption process on a per block data unit basis in accordance with the generated block key.

Preferably, the block as the encryption process unit includes the user data of at least one sector, and the crypto processor generates the block key by extracting the block seed from the user data of at least one sector, and performs the decryption process on a per block data unit basis in accordance with the generated block key.

Preferably, the block seed includes random number data contained in the user data, and the crypto processor generates the block key by extracting the random number data as the block seed, and performs the decryption process on a per block data unit basis in accordance with the generated block key.

Preferably, the crypto processor extracts, as a block seed, a portion of user control data from user data and the user control data, forming a block as an encryption process unit of contents, generates the block key in a crypto process that applies the unit key to the block seed, and performs the decryption process on a per block data unit basis in accordance with the generated block key.

Preferably, the block as the encryption process unit includes the user data of at least one sector, and the crypto processor generates, from the user control data, the block key by extracting the block seed corresponding to the user data of at least one sector, and performs the decryption process on a per block data unit basis in accordance with the generated block key.

Preferably, the block seed includes random number data contained in user control data, and the crypto processor generates the block key by extracting the random number data as the block seed, and performs the decryption process on a per block data unit basis in accordance with the generated block key.

Preferably, the crypto processor performs the decryption process by commonly applying the unit key to the block as a plurality of encryption process units.

According to a second aspect of the present invention, an information processing apparatus for performing a content recording process to an information recording medium, includes a crypto processor for performing an encryption process every at least one content management unit that is to be recorded on the information recording medium. The crypto processor generates a unit key corresponding to each content management unit in a crypto process that is based on a unit generation key commonly applied to at least one content management unit and a record seed set for each content management unit, and performs the encryption process using one of the generated block key and a block key that is generated based on the generated unit key, thereby performing a generation process of generating encrypted data to be stored in the information recording medium.

Preferably, the crypto processor sets, as a block seed, a portion of user data forming a content, generates the block key in a crypto process that applies the unit key to the block seed, and executes the encryption process on a per block data unit basis of block data in accordance with the generated block key.

Preferably, the block data includes the user data of at least one sector, and the crypto processor generates the block key by extracting the block seed from the user data of at least one sector, and performs the encryption process on a per block data unit basis in accordance with the generated block key.

Preferably, the block seed includes random number data contained in the user data, and the crypto processor generates the block key by extracting the random number data as the block seed, and performs the encryption process on a per block data unit basis in accordance with the generated block key.

Preferably, the crypto processor extracts, as a block seed, a portion of user control data from user data and the user control data, forming a content, and generates the block key through a crypto process that applies the unit key to the block seed, thereby executing the encryption process on a per block data unit basis in accordance with the generated block key.

Preferably, a block as an encryption process unit includes user data of at least one sector, and the crypto processor generates the block key by extracting, from the user control data, the block seed corresponding to the user data of at least one sector, and executes the encryption process on a per block data unit basis in accordance with the block key.

Preferably, the block seed includes random number data contained in the user control data, and the crypto processor generates the block key by extracting the random number data as the block seed, and executes the encryption process on a per block data unit basis In accordance with the generated block key.

Preferably, the crypto processor performs the encryption process on a content by directly and commonly applying the unit key on a block as a plurality of encryption process units.

According to a third aspect of the present invention, an information recording medium for storing an encrypted content stores at least one content management unit containing data encrypted by different encryption keys. The content management unit includes data that is encrypted individually using one of a unit key and a block key that is generated based on the unit key, the unit key being generated in a crypto process based on a unit generation key commonly applied to the content management units and a record seed individually set for each content management unit.

Preferably, the content management unit includes data that is encrypted on a per block data unit basis of block data based on a block key that is generated in a crypto process, the crypto process applying the unit key to a block seed including a portion of user data forming a content.

Preferably, the block data, arranged in the user data of at least one sector, includes data that is encrypted on a per block data unit basis in a crypto process, the crypto process applying a block key that is generated based on a block seed extracted from the user data of at least one sector.

Preferably, the block seed includes random number data stored in a user data section.

Preferably, the content management unit includes data that is encrypted on a per block data unit basis based on the block key generated in a crypto process, the crypto process applying the unit key to the block seed including a portion of user control data out of user data and the user control data forming a content.

Preferably, the block data, arranged in the user data of at least one section, includes data that is encrypted on a per block data unit basis in a crypto process, the crypto process applying the block key that is generated based on the block seed extracted from the user control data corresponding to the user data of at least one sector.

Preferably, the block seed includes random number data contained in the user control data.

Preferably, the content management unit includes data that is encrypted by commonly and directly applying the unit key to a block as a plurality of encryption process units.

According to a fourth aspect of the present invention, an information processing method for replaying a content, includes a crypto step for performing a decryption process for decrypting an encrypted content containing at least one content management unit stored in an information recording medium. The crypto step includes generating a unit key generation key, which is commonly applied to at least one content management unit, in accordance with key generation information stored in the information recording medium, generating a unit key corresponding to a content management unit encrypted in a crypto process based on the unit key generation key and a record seed corresponding to the unit-based content management unit stored in the information recording medium, and performing the decryption process on the encrypted content using one of the generated unit key and a block key that is generated based on the unit key.

Preferably, the image processing method further includes acquiring the key generation information by performing the decryption process that applies, on an encryption key block stored in the information recording medium, a device key provided in a tree-structured key distribution method.

Preferably, the image processing method further includes acquiring the key generation information by reading a physical index, recorded onto the information recording medium, using a method different from a replay method of replaying the encrypted content recorded in the information recording medium.

Preferably, an image processing method further includes reading the physical index recorded as a wobble recording signal.

Preferably, the image processing method further includes extracting, as a block seed, a portion of user data forming a block as an encryption process unit of contents, generating the block key in a crypto process that applies the unit key to the block seed, and performing the decryption process on a per block data unit basis in accordance with the generated block key.

Preferably, the image processing method further includes extracting, as a block seed, a portion of user control data from user data and the user control data, forming a block as an encryption process unit of contents, generating the block key in a crypto process that applies the unit key to the block seed, and performing the decryption process on a per block data unit basis in accordance with the generated block key.

According to a fifth aspect of the present invention, an information processing method for performing a content recording process to an information recording medium, includes a crypto step for performing an encryption process every at least one content management unit that to be recorded on the information recording medium. The crypto step includes generating a unit key corresponding to each content management unit in a crypto process that is based on a unit generation key commonly applied to at least one content management unit and a record seed set for each content management unit, and performing the encryption process, using one of the generated block key and a block key that is generated based on the generated unit key, to encrypt data to be stored in the information recording medium.

Preferably, the crypto step further includes setting, as a block seed, a portion of user data forming a content, generating the block key in a crypto process that applies the unit key to the block seed, and executing the encryption process on a per block data unit basis of block data in accordance with the generated block key.

Preferably, the crypto step includes extracting, as a block seed, a portion of user control data from user data and the user control data, forming a content, generating the block key through a crypto process that applies the unit key to the block seed, and executing the encryption process on a per block data unit basis in accordance with the generated block key.

According to a sixth aspect of the present invention, a computer program for replaying a content, includes a crypto step for performing a decryption process for decrypting an encrypted content containing at least one content management unit stored in an information recording medium. The crypto step includes generating a unit key generation key, which is commonly applied to at least one content management unit, in accordance with key generation information stored in the information recording medium, generating a unit key corresponding to a content management unit encrypted in a crypto process based on the unit key generation key and a record seed corresponding to the unit-based content management unit stored in the information recording medium, and performing the decryption process on the encrypted content using one of the generated unit key and a block key that is generated in accordance with the unit key.

According to a seventh aspect of the present invention, a computer program for performing a content recording process to an information recording medium, includes a crypto step for performing an encryption process every at least one content management unit that is to be recorded on the information recording medium. The crypto step includes generating a unit key corresponding to each content management unit in a crypto process that is based on a unit generation key commonly applied to at least one content management unit and a record seed set for each content management unit, and performing the encryption process using one of the generated block key and a block key that is generated based on the generated unit key, to encrypt data to be stored in the information recording medium.

The computer program of an embodiment of the present invention is supplied to a general-purpose computer system performing a variety of program codes, from a storage medium or communication medium in a computer readable form, the storage medium being, for example, a CD, a floppy disk (FD), or magneto-optical disk (MO), and the communication medium being, for example, a network. With the program provided in a computer readable form, the computer system performs processes in response to the program.

Other objects, features and advantages of the present invention will be apparent from a more detailed description of the embodiments of the present invention to be discussed later and accompanying drawings. A system in this specification refers to a logical set of a plurality of apparatuses, and does not necessarily refer to a plurality of apparatuses, each housed in its own casing.

In accordance with the embodiments of the present invention, a content in the encrypted form thereof is stored in the information recording medium, such as a blu-ray disk or a DVD, and the information processing apparatus decrypts the encrypted content for playing. The content to be stored in the information recording medium is divided into content management units (CPS units), each content management unit is encrypted using a unit key that is produced for a respective content management unit. Even when a plurality of contents are stored in a single disk, the usage management of each content is performed on a per content basis.

In accordance with the preferred embodiments of the present invention, the unit key generation key is generated based on a variety of key generation information. The unit key corresponding to each unit is generated by applying the record seed corresponding to each CPS unit to the unit generation key. Furthermore, the block key is generated based on the unit key and the block seed that is extracted on a per block unit that is set every 3 sectors. The encryption process is thus performed on a per block unit basis. During decryption, the decrypting of the content is permitted conditional on the matching in the key generation information, the record seed, and the block seed stored in a disk. For example, the use of the unauthorized copy content from a ROM disk is prevented.

In accordance with the preferred embodiments of the present invention, an encryption key block complying with a tree-structured key delivery arrangement, such as RKB, or a wobble record signal is used as information required to generate the unit key. Signals recorded using these methods, different from ordinary data recording and replay method, are difficult to copy. Any apparatuses other than the information processing apparatus as a correct device are unable to produce the unit key, and the unauthorized use of the content is efficiently controlled.

In accordance with the preferred embodiments of the present invention, the block seed is set in each of the user data and the user control data. The random number can be set as the block seed. With diversity in block seed maintained, each block is thus encrypted with a different block key. This arrangement presents difficulty to any third party who may attempt to analyze the content.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram of the data structure of storage data of an information recording medium;
Fig. 2 is a table listing the correspondence between the types of CPS unit and record seeds;
Fig. 3 illustrates the data structure of record data of a lead-in area;
Figs. 4A and 4B illustrate a record process of a wobble signal;
Fig. 5 illustrates the structure of an encryption key block;
Fig. 6 illustrates the manufacturing process of an information recording medium;
Fig. 7 is a block diagram illustrating in detail the process performed by a trusted center, a content editing entity, and an information recording medium manufacturing entity;
Fig. 8 generally illustrates a content replay process of the information processing apparatus:
Fig. 9 illustrates in detail the content replay process of the information processing apparatus;
Figs. 10A-10D illustrate a crypto process for key generation in the content replay process of the information processing apparatus;
Fig. 11 illustrates the structure of the data recorded on the information recording medium and the outline of a decryption process of the record data;
Figs. 12A-12C illustrate in detail user data to be block encrypted;
Fig. 13 illustrates the structure of the record data in a first setting in a record and replay process of the encrypted content;
Fig. 14 illustrates a data decryption operation in the first setting in the record and replay process of the encrypted content;
Fig. 15 illustrates the structure of the record data in a second setting in a record and replay process of the encrypted content;
Fig. 16 illustrates a data decryption operation in the second setting in the record and replay process of the encrypted content;
Fig. 17 illustrates the structure of the record data in a third setting in a record and replay process of the encrypted content;
Fig. 18 illustrates a data decryption operation in the third setting in the record and replay process of the encrypted content;
Fig. 19 illustrates the structure of the record data in a fourth setting in a record and replay process of the encrypted content;
Fig. 20 illustrates a data decryption operation in the fourth setting in the record and replay process of the encrypted content;
Fig. 21 illustrates the structure of the record data in a fifth setting in a record and replay process of the encrypted content;
Fig. 22 illustrates a data decryption operation in the fifth setting in the record and replay process of the encrypted content;
Fig. 23 illustrates the structure of the record data in a sixth setting in a record and replay process of the encrypted content;
Fig. 24 illustrates a data decryption operation in the sixth setting in the record and replay process of the encrypted content; and
Fig. 25 illustrates the structure of the information processing apparatus that has the information recording medium loaded therein for playing the content.

### DESCRIPTION OF THE PREFERRED EMBODIMENTS

An information processing apparatus, an information processing method, an information recording medium, and a computer program in accordance with preferred embodiments of the present invention are described below with reference to the drawings.

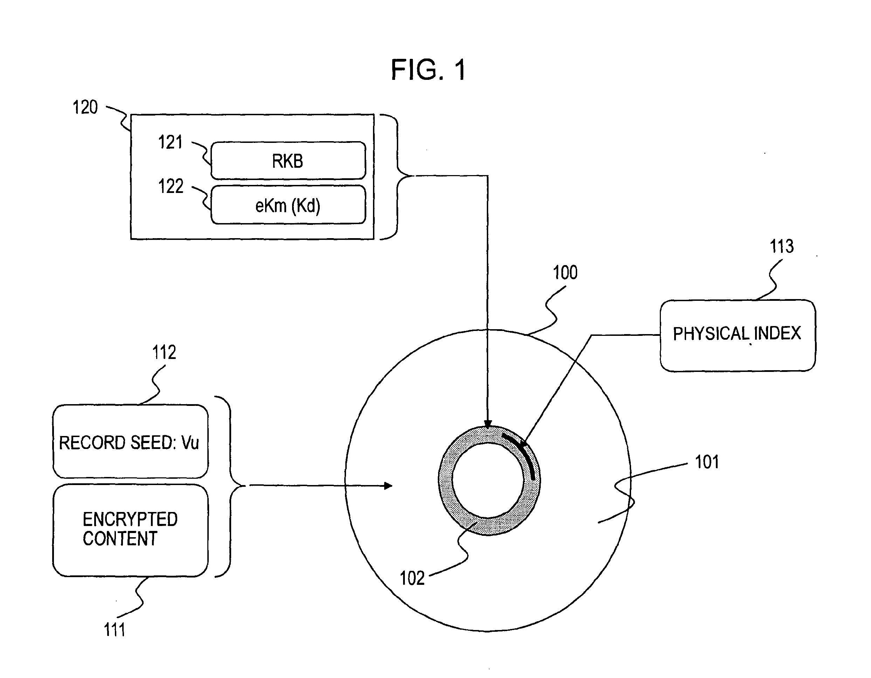

The structure of data stored in an information recording medium 100 is described below. Fig. 1 illustrates an information recording medium 100 that has stored a content in accordance with one embodiment of the present invention. Here, the disk having stored the content is a ROM disk.

The ROM disk is an information recording medium, such as a blu-ray disk or a DVD. The ROM disk has stored a legal content and is the one that has been manufactured in a disk plant under the permission of a content right holder who has a legal copyright and a distributorship of the content. In the following discussion of the preferred embodiments, the information recording medium is of a disk type, but the present invention is applicable to a diversity of information recording media.

Referring to Fig. 1, the information recording medium 100 includes a data storage area 101 for storing data, such as a content, and a lead-in area 102 for storing information related to the disk and stored contents, and key information for use in a decryption process of the content.

The data storage area 101 stores an encrypted content 111, and a record seed 112 as information required to generate a key applied to the decryption process of the encrypted content. The lead-in area 102 stores a variety of information required to generate keys applicable to the decryption process of the encrypted content 111, i.e., a physical index 113, and encryption key information 120. The physical index 113 and the encryption key information 120 are not necessarily stored in the lead-in area 102. Optionally, the data storage area 101 stores the physical index 113 and the encryption key information 120.

These pieces of information are outlined below.

The information recording medium 100 stores a diversity of contents. The contents are divided into two major categories, i.e., main contents and sub-contents. The main contents include an audio visual stream of moving picture content such as high-definition movies, game playing programs, image files, audio data, and text data in a standardized format. The main content, in compliance with a particular audio visual standard, is stored in a particular audio visual data format. More specifically, blu-ray disk ROM standard data is stored in a blu-ray disk ROM standard format.

For example, service data stored as sub-contents includes game playing programs, image files, audio data, and text data. The sub-content includes data in a data format not complying with a particular audio visual data format. For example, blu-ray disk ROM nonstandard data is stored in any format not complying with the blu-ray disk ROM standard format.

The types of each of the main content and the sub-content includes music data, image data, such as moving pictures and still pictures, game playing programs, and web contents. These contents includes a diversity of information. Some information of the information recording medium 100 is used alone, and other content information of the information recording medium 100 is used in combination with data supplied from a server via a network.

Each content or a plurality of contents contained in the main content or the sub-content is encrypted with a respective individual encryption key (unit key) applied to perform usage management of the content before being stored in the information recording medium 100.

More specifically, the audio visual stream forming the contents, the music data, image data, such as moving pictures and still pictures, game playing programs, and web contents are segmented into units as a usage management unit in the use of the contents. The units are then assigned record seeds Vu 112.

When the audio visual (AV) stream forming the main content is used, an encryption key for each unit is acquired in a predetermined encryption key generation sequence determined by the record seed Vu112, the physical index 113, and the encryption key information 120. The encrypted content is decrypted on a per unit basis using the acquired key. The acquisition of the encryption key and the decryption process will be described in detail later. As the main content, the sub-content including music data, image data, such as moving pictures and still pictures, game playing programs, and web contents is decrypted in the decryption sequence using a generated key. Alternatively, any particular sequence may be used in the decryption process.

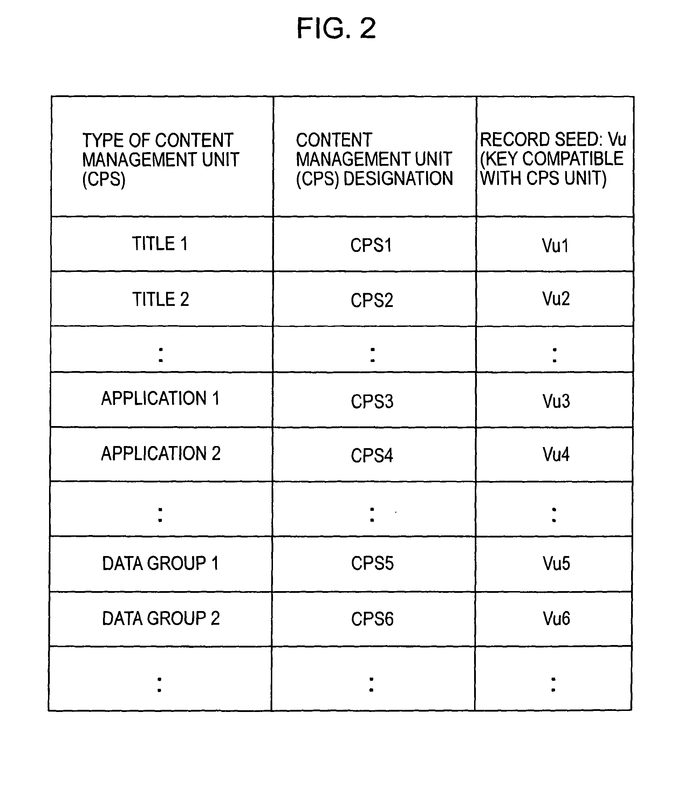

A content usage management unit is referred to as a CPS unit (content management unit). Fig. 2 illustrates the correspondence between the type of PCS unit and the record seed. As shown, the types of CPS units includes the title of the content, application, data group, etc. As shown in Fig. 2, CPS unit 1 is set to a record seed Vu1 in title 1, and CPS unit 2 is set to a record seed Vu2 in title 2.

When a content of the title 1 is replayed, a unit key (encryption key) corresponding to the CPS 1 is acquired using the record seed Vu1. The encrypted content for the title 1 is decrypted based on the acquired unit key. When a content of the title 2 is replayed, a unit key corresponding to the CPS 2 is acquired using the record seed Vu2. The encrypted content for the title 2 is decrypted based on the acquired unit key. The same is true of the remaining contents.

The physical index 113 is recorded on the lead-in area 102 in the information recording medium 100. As the record seed 112, the physical index 113 is key generation information which is used to generate a key for the decryption process of the encrypted content stored in the data storage area 101 of the information recording medium 100. Here, the physical index 113 is recorded on the lead-in area 102. As will be discussed later, the physical index 113 can be recorded on the data storage area 101 rather than the lead-in area 102 if the physical index 113 is organized as data that is recorded and replayed in a method different from the method of recording and replaying of the encrypted content stored in the data storage area 101.

The lead-in area 102 is set up in inner circles of the disk as an area indicating a session start location of the disk. Written on the lead-in area 102 are disk related information, such as the type of the disk, content related information of the content stored in the data storage area 101, and the encryption key information 120 for use in the decryption of the content.

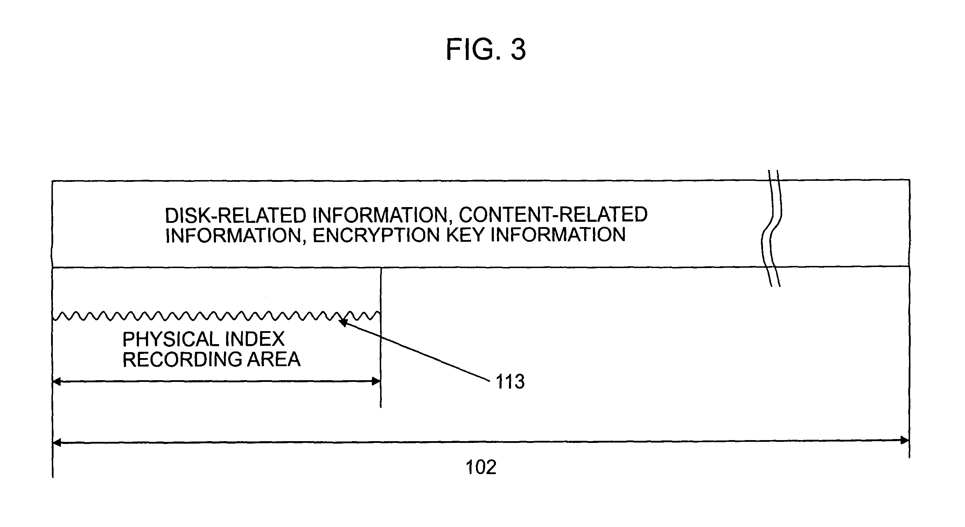

Fig. 3 illustrates the structure of record data in the lead-in area 102. The physical index 113 is written in parallel with the area where the disk related information (such as the type of the disk), the content related information, and the encryption key information 120 for use in the decryption of the content are written.

The disk related information, the content related information, and the encryption key information 120 are recorded in an ordinary data recording and replaying method using spaces and marks represented by pits. In contrast, the physical index 113 is recorded in a method, such as a wobble record method, different from the ordinary recording and replaying method.

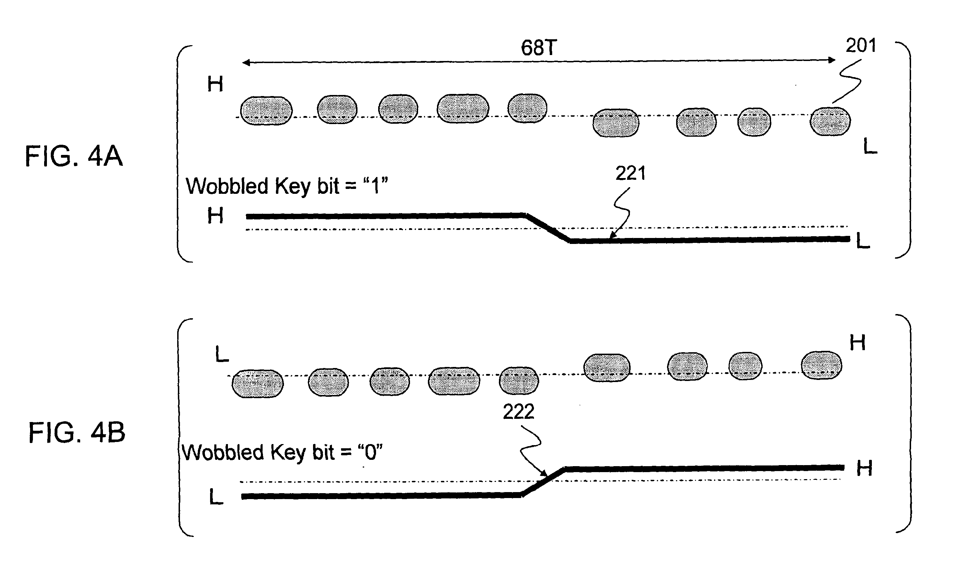

The record process of the wobble signal is described below with reference to Fig. 4. The disk related information, the content related information, and the encryption key information 120 are recorded using the lengths of the spaces and marks represented by pits 201.

The physical index 113 is recorded by controlling the recording of wobbling, namely, the oscillation of a pit chain. A wobble record signal 221 shown in Fig. 4A causes the pit chain recording the main data to wobble from an upper row to a lower row (from high to low). The wobble record signal 221 corresponds to a record bit of "1" of key information as the physical index 113.

A wobble record signal 222 of Fig. 4B causes the pit chain recording the main data to wobble from a lower row to an upper row (from low to high). The wobble record signal 222 corresponds to a record bit of "0" of key information as the physical index 113.

One bit of the wobble record signal corresponds to the wobble state of the record pits having 68T (T refers to one channel length of a pit signal) of the main data recorded as the pit signal. In other words, for every 68T, the main data recorded in the pit information is read as one bit of the key information as the physical index 113.

The disk related information, the content related information, and the encryption key information 120 are recorded in the pit information. The key information as the physical index is thus recorded in the wobble record signal. The main data and the key information are recorded onto the disk.

A process for recording and replay of the wobble record signal must be different from the process of ordinary data recording and replay.

The recording of the physical index 113 using the wobble record signal has been discussed. The recording of the physical index 113 is not limited to the wobble record signal. Any of a variety of recording methods different from the pit signal recording can be used. For example, the width of or the shape of pits recordable on a ROM disk only can be varied. Alternatively, the depth of grooves can be varied.

As the record seed 112 and the physical index 113, the encryption key information 120 includes a disk key (Kd) as key generation information used to generate a key for use in the decryption process of the encrypted content stored in the data storage area 101 of the information recording medium 100.

The encryption key information 120 includes a renewal key block (RKB) 121 as an encryption key block, generated based on a tree-structured key delivery method, known as one broadcast encryption method, and key information eKm (Kd) 122 into which the disk key Kd is encrypted with a medium key Km.

The RKB 121 allows a user to acquire the medium key Km for content decryption through only a decryption process based on a device key stored in the information processing apparatus of the user having an effective license. In other words, the key acquisition is possible only when a user device (information processing apparatus) holds an effective license in the tree-structured information delivery system. This arrangement is intended to prevent the acquisition of a revoked medium key of the user device. A trusted center generates an RKB that cannot be decrypted by a device key stored in a particular user device even with key information in the RKB modified, namely, generates an RKB having a structure that doest not permit the acquisition of the medium key required for content decryption.

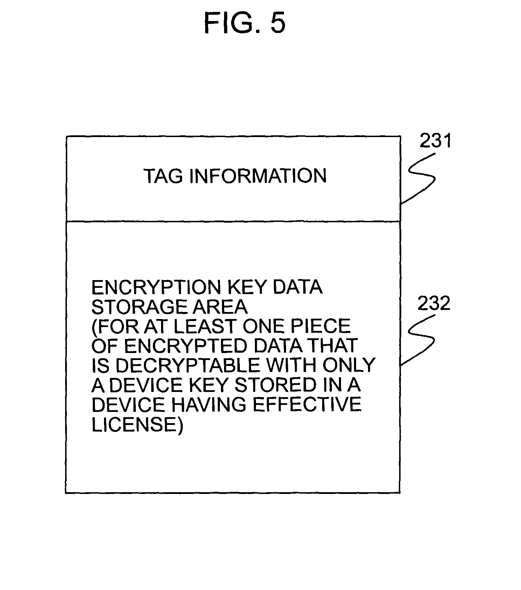

As shown in Fig. 5, the RKB includes tag information 231 and an encryption key data storage section 232. The encryption key data storage section 232 is at least one piece of encrypted data that is decryptable in only a process using a device key stored in an apparatus (device) holding the effective license, namely, a device key containing a set of keys set corresponding to nodes and leaves contained in a tree structure. For example, the tree structure has a bifurcate structure with an apex node as a root. Each device corresponds to one leaf at the bottom layer. Each device is provided with keys corresponding to nodes present from the leaf to the root, as the device key.

The encryption key data storage section 232 stores transmission data that is encrypted using a variety of node keys. Depending on a node key in use, a device having decryption capability is freely set.

The tag information 231 indicates the order of at least one piece of encrypted data stored in the encryption key data storage section 232, and is used for each device to select decryptable encrypted data. When the RKB as the encryption key block is recorded onto the information recording medium 100 and the information recording medium 100 is supplied to each device, only the device (apparatus) holding the effective license can acquire the medium key.

The medium key Km that can be acquired from the RKB 121 is applied to the decryption process of the encryption disk key eKm (Kd). Only the content replay apparatus (device) having the effective license acquires the medium key by decrypting the RKB 121 using the device key of own device. Using the acquired medium key, the content replay apparatus decrypts the encryption disk key eKm (Kd), thereby acquiring the disk key Kd.

As the record seed 112 and the physical index 113, the disk key Kd is key generation information used to generate a key for use in the decryption process of the encrypted content stored in the data storage area 101 of the information recording medium 100.

The information processing apparatus performing a content replay process reads, from the information recording medium 100, the record seed 112, the physical index 113, and the encryption key information 120. Using all these pieces of information, the information processing apparatus generates the unit key corresponding to the content management unit, and performs the decryption process of the content based on the unit key Ku. The decryption process will be discussed in detail later.

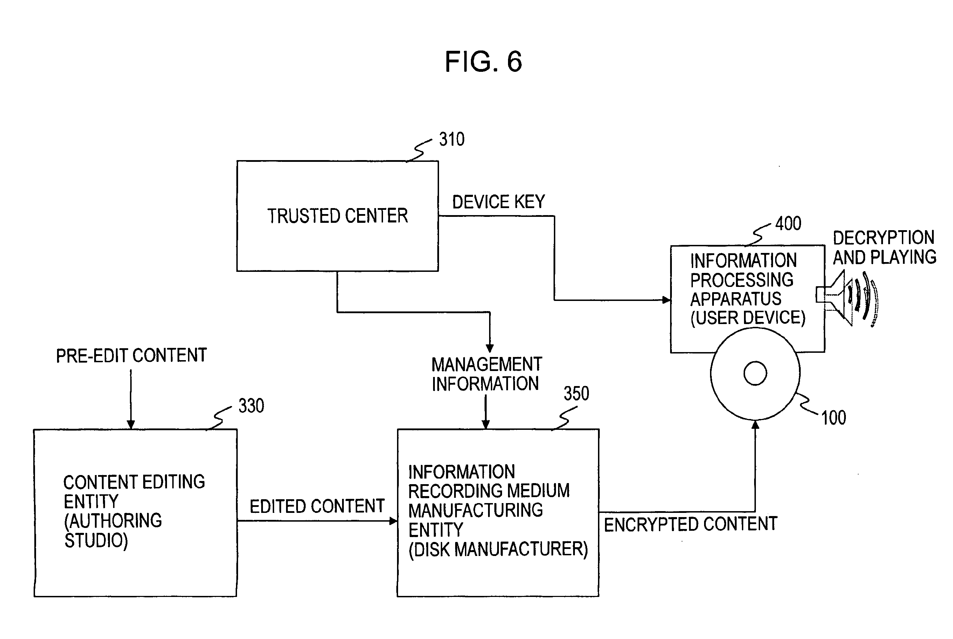

As previously described, the information recording medium 100 stores the encrypted content 111, and key information required to decrypt and replay the encrypted content 111, namely, the key generation information required to generate the unit key. The manufacturing process of the information recording medium 100 is described below with reference to Fig. 6.

As shown, the encrypted content 111 to be stored in the information recording medium 100 is edited in a content editing entity (authoring studio) 330. A large number of CDs, DVDs, or Blu-ray disks as the information recording medium 100 are manufactured by an information recording medium manufacturing entity (disk manufacturer) 350. The information recording medium 100 is then replayed on the device (information processing apparatus) 400 of the user.

A trusted center 310 manages the manufacturing, sales, and general use of disks. The trusted center 310 provides the information recording medium manufacturing entity 350 with a variety of management information. Based on the management information received from the trusted center 310, the information recording medium manufacturing entity 350 edits and encrypts the contents received from the content editing entity 330, and generates and stores the key information of the content. The trusted center 310 manages and supplies the device key stored in the information processing apparatus 400.

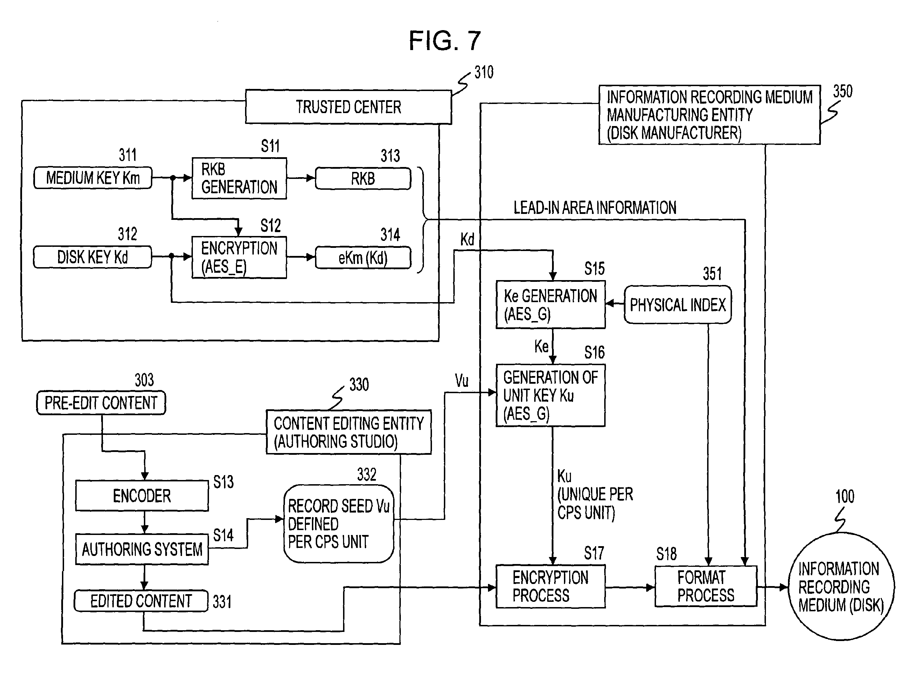

The process of the trusted center 310, the content editing entity 330, and the information recording medium manufacturing entity 350 is described below with reference to Fig. 7.

Fig. 7 illustrates the process of the trusted center 310, the content editing entity 330, and the information recording medium manufacturing entity 350.

A pre-edit content 303 is brought to the content editing entity 330. An encoder performs an encode process on MPEG data or the like (step S13), and an authoring system performs an edit process on the encoded data (step S14). The resulting data becomes an edited content 331.

When the authoring system performs the edit process on the data in step S14, a record seed Vu 332 for use in content encryption is also produced. The record seed Vu 332 is set on a per CPS unit basis. If the edited content 331 contains a plurality of content management units (CPS units), the record seeds Vu 332 of the same number as the number of CPS units are produced. The value of the record seed Vu 332 is a random number having a 128 bit length, for example. The edited content 331 and the record seed Vu 332 are sent to the information recording medium manufacturing entity 350.

The information recording medium manufacturing entity 350 acquires information required for content encryption from the trusted center 310.

The trusted center 310 generates a medium key Km 311 and a disk key Kd 312, and performs a RKB generation process (step S11) to store the medium key Km 311 in the RKB as the encrypted data, thereby producing an RKB 313.

As previously discussed, the RKB 313 stores the encrypted data that enables decryption through only the decryption process that uses the device key stored in the replay apparatus holding a license to use the content. The replay device holding the authentic license to use the content can acquire the medium key Km.

The trusted center 310 encrypts the disk key Kd 312 with the medium key Km 311, and performs an encryption operation using an advanced encryption standard (AES) encryption process (step S12), thereby producing the encryption disk key eKm (Kd) 314 encrypted with the medium key Km 311.

The trusted center 310 sends, to the information recording medium manufacturing entity 350, the two pieces of information, i.e., the RKB 313 holding the medium key Km, and the encryption disk key eKm (Kd) 314 encrypted with the medium key Km 311, and further the disk key Kd 312.

Upon receiving these pieces of information, the information recording medium manufacturing entity 350 encrypts the content in a procedure discussed below.

In step S15, the information recording medium manufacturing entity 350 generates a unit key generation key (embedded key) serving as a source of the unit key corresponding to the CPS unit. The unit key generation key Ke is generated through an encryption process (such as the AES encryption process) that uses the disk key Kd acquired from the trusted center 310 and a physical index Ve 351 that is securely produced within the information recording medium manufacturing entity 350.

In step S16, the information recording medium manufacturing entity 350 generates the unit key Ku for use in content encryption using the record seed Vu acquired from the content editing entity 330 and the unit key generation key Ke.

As previously discussed, the content stored in the information recording medium 100 is segmented into the content management units (CPS units), and is assigned the record seed Vu on a per CPS unit basis. For example, when n PCS units 1-n are set for the content to be stored in the information recording medium 100, record seeds Vu1 - Vun are generated. The record seeds are supplied to the information recording medium manufacturing entity 350 from the content editing entity 330.

The information recording medium manufacturing entity 350 successively applies the unit key generation key Ke to the n record seeds Vul-Vun acquired form the content editing entity 330, thereby generating n unit keys Kul-Kun. The record seeds Vul-Vun have respective different values corresponding to the content (CPS units), and the generated unit keys Kul-Kun also become different key data.

In step S17, the information recording medium manufacturing entity 350 encrypts the content supplied thereto from the content editing entity 330 with unit keys Kul-Kun applied to respective CPS units, thereby producing the encrypted content. The content may be encrypted with the unit key directly applied thereto. Preferably, the content is divided into blocks, a block key is produced for each block, and the content is encrypted on a per block basis with the respective block key applied. The encryption process using the block key will be discussed later.

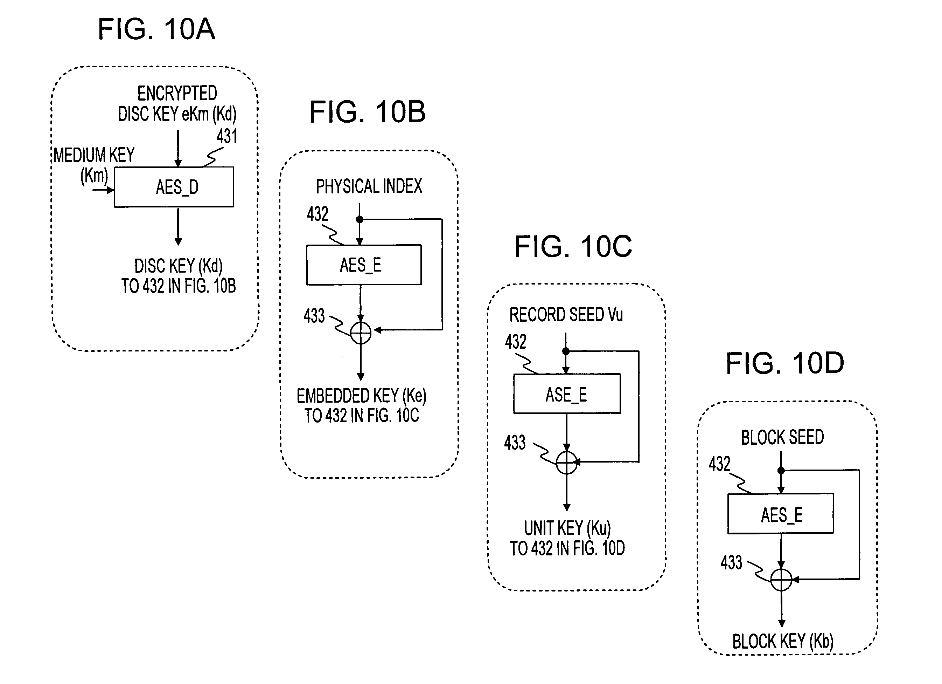

In step S18, the information recording medium manufacturing entity 350 organizes, in a predetermined recordable format, the physical index 351 and information to be recorded on the lead-in area, i.e., the disk key eKm(Kd) encrypted with the RKB and the medium key, thereby recording all information described in Fig. 1 on to the information recording medium 100. The key generation process in steps S15 and S16 performed by the information recording medium manufacturing entity 350 will be discussed later in detail with reference to Fig. 10.

The content replay process of the information processing apparatus for the information recording medium 100 storing a content encrypted on a per CPS unit basis and a variety of key information is described below.

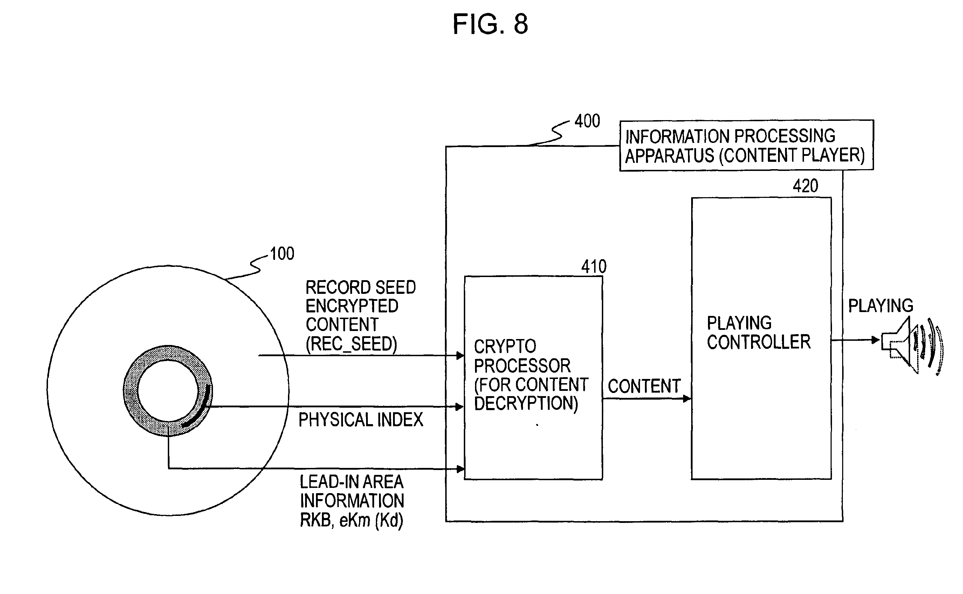

As shown in Fig. 8, the content replay process of the information processing apparatus 400 includes a decryption process of a crypto processor 410 for decrypting the encrypted content and a playing control process of a playing controller 420.

A variety of information is read from the information recording medium 100. The crypto processor 410 performs the decryption process on the encrypted content. The decrypted content is supplied to the playing controller 420. The playing controller 420 performs a replay condition determination process, and continuously executes content playing only if replay conditions are satisfied. If the replay conditions are not satisfied, the content playing is suspended.

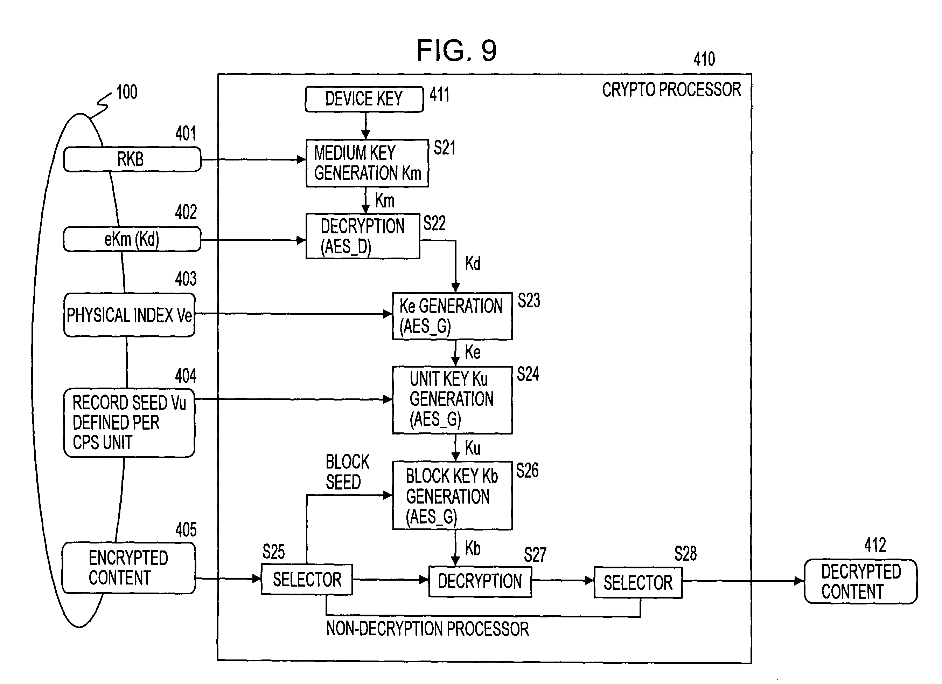

The decryption process of the crypto processor 410 for decrypting the encrypted content is described below with reference to Fig. 9.

In the content decryption process, the crypto processor 410 reads the device key 411 stored in the memory thereof. The device key 411 is a secret key stored in the information processing apparatus holding the license to use the content.

In step S21, the crypto processor 410 uses the device key 411 to perform the decryption process on an RKB 401 as an encryption key block holding the medium key Km stored in the information recording medium 100. The crypto processor 410 thus acquires the medium key Km.

In step S22, the crypto processor 410 decrypts the encryption disk key eKm (Kd), encrypted with the medium key Km stored in the information recording medium 100, using the medium key Km acquired in the RKB process in step S21. This decryption process is performed in accordance with an AES encryption algorithm, for example. As shown in Fig. 9, AES_G represents a key generation process of the AES encryption algorithm, and AES_D represents a data decryption process of AES encryption algorithm.

In step S23, the crypto processor 410 generates the unit key generation key Ke based on the encryption process based on a physical index 403 read from the information recording medium 100 and the disk key Kd (embedded key). The key generation process is in compliance with the AES encryption algorithm, for example.

In step S24, the crypto processor 410 acquires any of the record seeds Vul-Vun corresponding to the CPS unit (content) stored in the information recording medium 100, and performs the encryption process based on the unit key generation key Ke generated in step S23 to generate a CPS unit key Kux.

The CPS unit key Kux is the one that has been set for the CPS unit corresponding to the content to be replayed, namely, for a CPS unit x selected from among the CPS units 1-n stored in the information recording medium 100. When a plurality of CPS units are decrypted, a plurality of record seeds Vua, Vub... corresponding to the plurality of CPS units are acquired. The crypto processor 410 performs the encryption process based on the unit key generation key Ke generated in step S23, thereby generating the plurality of record seeds Kua, Kub...

The crypto processor 410 acquires an encrypted content 405 to be replayed, namely, the CPS unit selected as being replayed. In step S25, the crypto processor 410 acquires the block seed set for each block data of the content data as the CPS unit. In step S26, the crypto processor 410 performs an encryption process based on the block seed and the CPS unit key Ku, thereby generating a block key Kb. In step S27, the crypto processor 410 performs a decryption process on the encrypted content as the CPS unit on a per block data unit basis.

The content data as the CPS unit has been encrypted using different block keys Kb having a block unit with a predetermined data length. When the content data is decrypted, the block key Kb as a decryption process key for the respective block is generated through an encryption process based on the block seed set for the respective block data and the CPS unit key Ku. Using the generated block key Kb, the decryption process is performed. The generation of the block key Kb and the decryption process based on the block key Kb will be discussed in detail later.

In step S28, the non-encrypted data, such as block seed, contained in the encrypted content is linked with the data decrypted in step S27. As a result, a decrypted content (CPS unit) 412 is output from the crypto processor 410 to the playing controller 420.

The decryption process performed in steps S22-S26 is described below with reference to Fig. 10.

In a specific generation process of the disk key Kd in step S22 as shown in Fig. 10A, the encryption disk key eKm (Kd) encrypted with the medium key Km stored in the information recording medium 100 is input to a AES decryptor 431. The AES decryptor 431 uses an advanced encryption standard (AES) encryption algorithm as a common key encryptosystem, thereby performing the decryption process with the medium key Km acquired from the RKB. For example, the AES decryptor 431 performs the decryption process in AES-ECB mode having 128 bit key length.

In the generation process of the unit key generation key Ke in step S23 shown in Fig. 10B, the disk key Kd and the physical index read from the information recording medium 100 are input to an AES encryptor 432. The AES encryptor 432 performs an encryption process (AES_E) in accordance with the AES encryption algorithm. The output of the AES encryptor 432 and physical index data are input to an exclusive OR gate 433. The exclusive OR gate 433 performs an exclusive OR gate operation, outputting a unit key generation key Ke. The AES encryptor 432 performs the encryption process in the AES-ECB mode having a 128 bit key length.

The operation AES_G shown in Fig. 9 is a key generation process using the AES algorithm. More specifically as shown in Fig. 10B, the key generation process is performed by the AES encryptor 432 and the exclusive OR (EXOR) gate 433.

The generation of the unit key generation key Ke shown in Fig. 10B corresponds to the process the information recording medium manufacturing entity 350 performs in step S15 previously discussed with reference to Fig. 7.

In the generation process of the unit key Ku in step S24 as shown in Fig. 10C, the record seed Vu corresponding to the CPS unit read from the information recording medium 100 and the unit key generation key Ke are input to the AES encryptor 432. The AES encryptor 432 performs the encryption process (AES_E) complying with the AES encryption algorithm. The output of the AES encryptor 432 and the record seed are input to the exclusive OR gate 433. The exclusive OR gate 433 performs an exclusive OR gate operation, thereby outputting the unit key Ku.

The generation process of the unit key Ku shown in Fig. 10C corresponds to the process the information recording medium manufacturing entity 350 performs in step S16 discussed with reference to Fig. 7.

In the generation process of the block key Kb in step S26 shown in Fig. 10D, the block seed corresponding to the block data contained in the CPS unit read from the information recording medium 100 and the unit key Ku are input to the AES encryptor 432. The AES encryptor 432 performs an encryption process (AES_E) complying with the AES encryption algorithm. The output of the AES encryptor 432 and the block seed are input to the exclusive OR gate 433. The exclusive OR gate 433 performs an exclusive OR gate operation, thereby outputting a block key Kb.

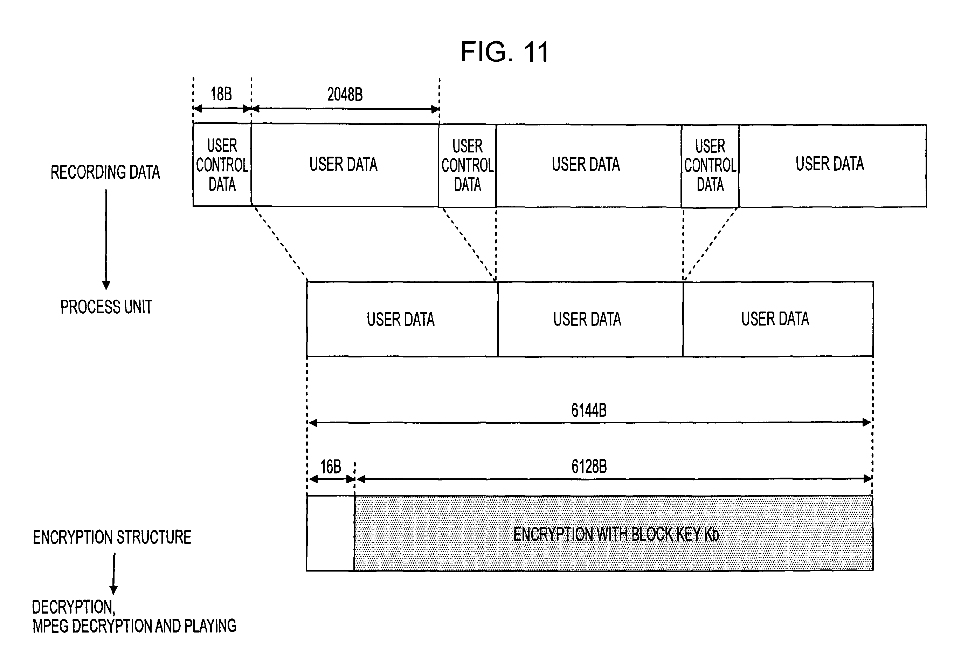

The encryption process and the decryption process of a content are now discussed in detail. The structure of record data to be stored in the information recording medium and the decryption process of the record data are generally discussed first referring to Fig. 11. As previously discussed, data stored in the information recording medium is the one that has been encrypted on a per block unit basis with the block key Kb that is generated based on the CPS unit key Ku per CPS unit.

To replay the content, as previously discussed with reference to Fig. 9, the CPS unit key Ku is generated from a variety of information stored in the information recording medium including: (a) disk key Kd acquired through the decryption process with the medium key Km that is acquired from the RKB, (b) physical index, and (c) record seed Vu for the CPS unit. Furthermore, the block key Kb is generated based on the block seed set for each block data unit, and the CPS unit key Ku, and the decryption process is performed using the block key Kb on a per block unit basis.

Fig. 11 illustrates the structure of record data to be stored in the information recording medium. User control data (UCD) having 18 bytes and user data having 2048 bytes containing actual audio visual (AV) content data are organized as one sector data. For example, three sectors of data having 6144 bytes is one encryption process unit, namely, a block. The setting of the block is not limited to three sector 6144 byte data. Various settings are possible. For example, one sector 2048 byte data may be set as one encryption process unit, namely, one block. Specific examples of the setting will be discussed later.

Fig. 11 illustrates 1 aligned unit (AU) as the encryption process unit with the three sector 6144 byte data set as one block. The 18 byte user control data is excluded from the decryption process. The user data as the actual audio visual data only is set as encryption process units. The information processing apparatus performing the replaying of the encrypted data stored in the information recording medium determines and extracts 1 AU as the encryption process unit based on flags in the control data.

If the three sector 6144 byte data is set as one block, the information processing apparatus replaying the encrypted data determines the 6144 byte data of the encryption process unit as 1 AU in response to the flag in the control data, and generates the block key Kb per 6144 byte unit, thereby performing the decryption process. If the one sector 2048 byte data is set as one block, the information processing apparatus replaying the encrypted data determines the 2048 byte data of the encryption process unit as 1 AU in response to the flag in the control data, and generates the block key Kb per 2048 byte unit, thereby performing the decryption process.

If the three sector 6144 byte data is set as one block, 1 AU as the encryption process unit contains a portion encrypted with the block key Kb in an encryption structure of Fig. 11. To produce the block key Kb, the block seed is necessary as previously discussed. The block seed is key generation information per block unit required to generate the block key Kb and the CPS unit key Ku.

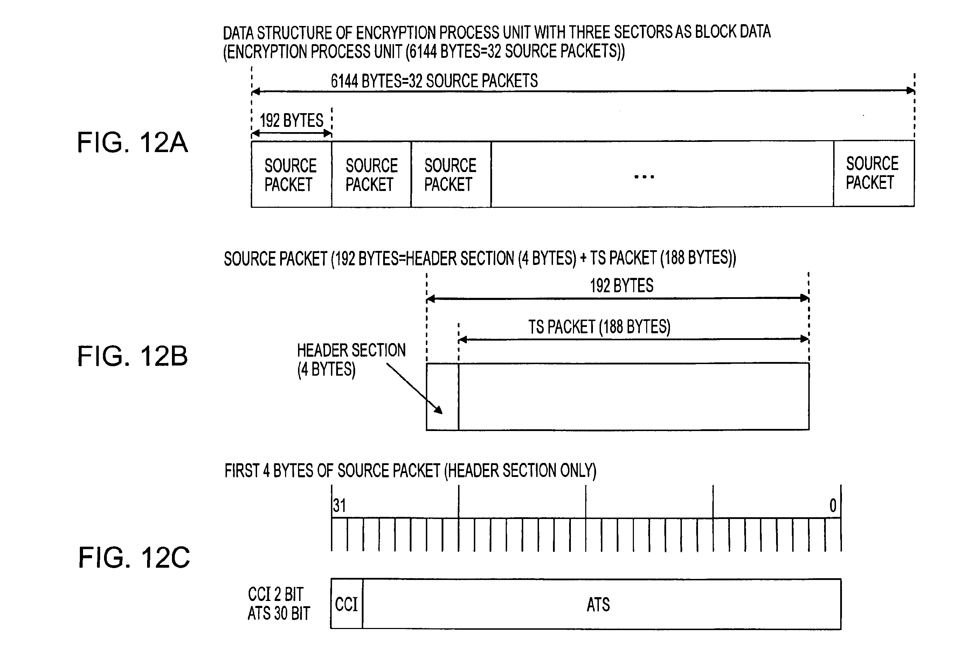

Figs. 12A-12C illustrate in detail the user data to be block encrypted. Fig. 12A illustrates the structure of the user data with three sectors set as block data (encryption process unit 6144 bytes = 32 source packets).

The AV stream has a data structure defined in the Blu-ray Disc Rewritable format or the Blue-ray Disc ROM format. If the three sector 6144 byte data is set as one block, an encryption process unit (block) of 6144 byte is consecutively organized, thereby forming a single CPS unit. The 6144 byte data includes 32 source packets, each source packet having a 192 byte length.

As shown in Fig. 12B, each source packet includes a 4 byte header section and a 184 byte TS packet. The encrypted content stored in the information recording medium is constructed of a transport stream (TS) defined in MPEG-2 system (ISO/IEC 13818-1). The transport stream holds a plurality of programs in a single stream, and specifies an arrival time stamp (ATS) as appearance time information of each transport packet.

Fig. 12C illustrates in detail the 4 byte header section of the source packet. The 4 byte header section includes copy control information in 2 bit front end thereof, followed by ATS as the appearance timing information of each transport packet. The time stamp is determined during coding so that transport stream system target decoder, i.e., a virtual decoder defined in the MPEG-2 system, is not destroyed. During decoding, the ATS attached to each transport packet controls appearance timing for decoding and replaying.

For example, the transport stream packet is recorded on a recording medium with intervals between the packets closed. The appearance timing of each packet can be controlled during replaying by recording the transport stream packet in synchronization with the appearance of each transport packet.

The encryption process and the decryption process with the block key Kb on a per block data unit basis are described below with reference to a plurality of different blocks and the setting structure of the block seed.

A setting example (1) has the following structure:
encryption process unit (block): three sector 6144 byte user data;
data to be encrypted: the three sector 6144 byte user data without the front end portion of 16 bytes (6128 bytes); and
block seed: the front end portion of 16 bytes (128 bits) of the three sector 6144 byte user data.

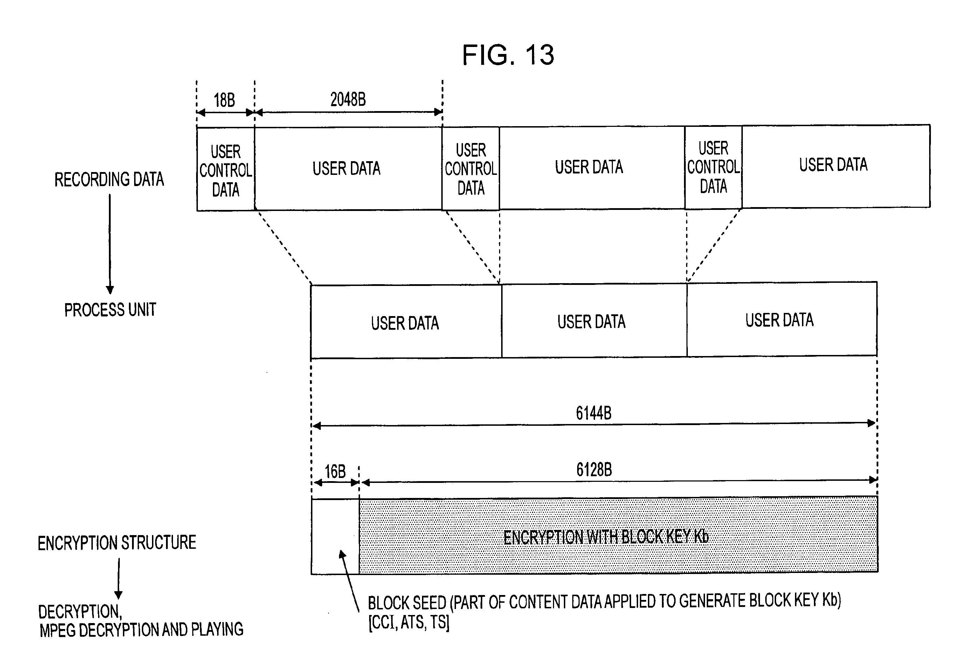

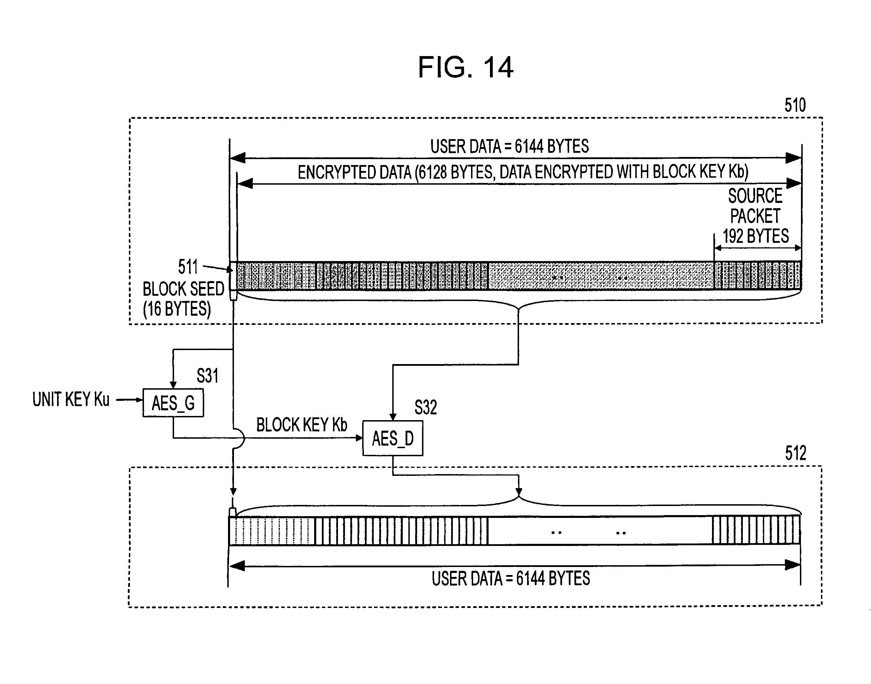

Fig. 13 illustrates the setting example (1), and Fig. 14 illustrates the decryption process of the setting example (1).

The structure of the record data in the setting example (1) is described below with reference to Fig. 13. As the record data in Fig. 11, record data in Fig. 13 is stored in the information recording medium. User control data of 18 bytes and user data of 2048 bytes containing actual AV content data is constructed as one sector data.

As shown in a process unit in Fig. 13, three sector 6144 byte user data excluding the user control data is set as one encryption process unit (block).

As shown in an encryption structure in Fig. 13, the block seed is the front end 16 bytes (128 bits) of the 6144 byte encryption process unit (block), and the data to be encrypted is the three sector 6144 byte user data without the front end 16 bytes (6128 bytes).

The 16 byte block seed is the front end 16 bytes of the one source packet described with reference to Figs. 12A-12C, and includes a 4 byte header section and a 12 byte front end of the TS packet. As already discussed with reference to Fig. 12C, the 4 byte header section of the source packet includes CCI and ATS as appearance timing information of the transport packet. The 16 byte block seed includes the copy control information CCI, time stamp ATS, and the 12 byte front end of the TS packet.

Since the 12 byte front end TS packet contains the content data itself, the block seed thus uses part of the content data. The time stamp information (ATS) is contained in the block seed. Since the time stamp information is different from packet to packet, the block key Kb generated from the block seed is also different in value from encryption process unit to encryption process unit. If the block key Kb is different from process unit to process unit, the amount of data encrypted with one key is limited to one encryption process unit, and identification of the encryption key becomes difficult.

The decryption process sequence of the record data in the setting example (1) is described with reference to Fig. 14. A encryption process unit (block) 510 of Fig. 14 forms an encrypted content (CPS unit) to be stored in the information recording medium 100.

The encryption process unit 510 is three sector 6144 byte user data. In the setting example (1), a 16 byte front end of the 6144 byte user data is set as a block seed 511.

The information processing apparatus performing the content replaying successively acquires the three sector 6144 byte data as the encryption process unit. In the selector processing step in step S25 discussed with reference to Fig. 9, the block seed 511 is separated from the remaining encrypted data of 6128 bytes. The user control data (UCD), although not shown in Fig. 14, is separated as non-encrypted data.

Step S31 of Fig. 14 corresponds to the block key Kb generation process in step S26 of Fig. 9. In step S31, an AES key generation algorithm (see Fig. 10D) is performed with the unit key Ku applied to the 16 byte front end of the 6144 byte user data as the block seed 511. The block key Kb thus results.

Step S32 of Fig. 14 corresponds to the decryption process in step S27 of Fig. 9. In step S32, the encrypted data of 6128 bytes, namely, the 6144 byte user data with the 16 byte front end as the block seed 511 removed therefrom, is input, and the AES decryption process is performed using the block key Kb generated in step S31.

The result of the decryption of the encrypted data of the 6144 byte user data without the 16 byte front end as the block seed 511 is combined with the block seed 511 to construct decrypted data 512. The decrypted data 512 is then input to the playing controller 420 of Fig. 8.

A setting example (2) has the following structure:
encryption process unit (block): three sector 6144 byte user data and 18 byte user control data corresponding to the front end sector of the user data;
data to be encrypted: the three sector 6144 byte user data; and
block seed: 16 bytes (128 bits) of the user control data corresponding to the front end sector of the three 6144 byte user data.

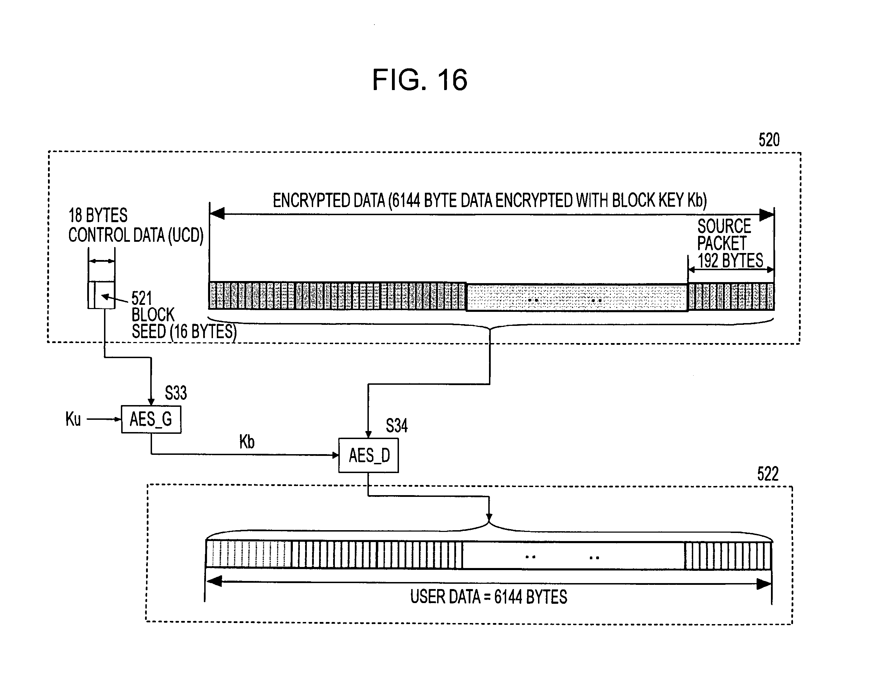

Fig. 16 illustrates the setting example (2), and Fig. 16 illustrates the decryption process of the setting example (2) .

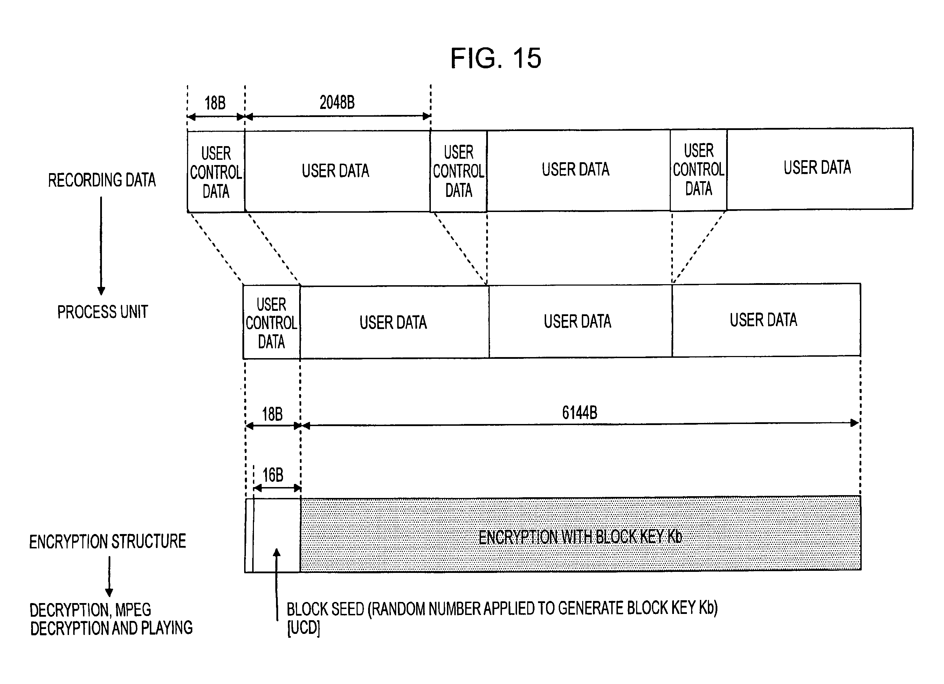

The structure of the record data in the setting example (2) is described below with reference to Fig. 15. As the record data in Fig. 11, record data in Fig. 15 is stored in the information recording medium. User control data of 18 bytes and user data of 2048 bytes containing actual AV content data form one sector data.

As shown in a process unit in Fig. 15, three sector 6144 byte user data and the 18 byte user control data corresponding to the front end sector of the user data are set as one encryption process unit (block).

As shown in an encryption structure in Fig. 15, the block seed is 16 bytes (128 bits) of the user control data corresponding to the front end sector of the three sector 6144 user data.

Since the 16 byte block seed uses a data portion of the user control data as management data corresponding to the content, a value different from encryption process unit from encryption process unit, for example, a random number, is set as the block seed regardless of the content of the content data. If the random number different from encryption process unit to encryption process unit is used as the block seed, the resulting block also becomes different from process unit to process unit. Using the random number seed different from process unit to process unit, and the block key different from process unit to process unit, the amount of data encrypted with one key is limited to one encryption process unit, and identification of the encryption key becomes advantageously difficult.

The decryption process sequence of the record data in the setting example (2) is described with reference to Fig. 16. A encryption process unit (block) 520 of Fig. 16 forms an encrypted content (CPS unit) to be stored in the information recording medium 100.

The encryption process unit 520 includes the three sector 6144 byte user data, and the 18 byte user control data corresponding to the front end sector of the user data. In the setting example (2), the 18 byte user control data corresponding to the front end sector of the three sector 6144 byte user data is set as a block seed 521.

The information processing apparatus performing the content replaying successively acquires the encryption process units. In the selector processing step in step S25 discussed with reference to Fig. 9, the block seed 521 (16 bytes) is separated from the remaining encrypted data of 6128 bytes.

Step S33 of Fig. 16 corresponds to the block key Kb generation process in step S26 of Fig. 9. In step S33, an AES key generation algorithm (see Fig. 10D) is performed with the unit key Ku applied to the block seed 521 constructed of 16 bytes of the user control data corresponding to the front end sector of the three sector 6144 user data. The block key Kb thus results.

Step S34 of Fig. 16 corresponds to the decryption process in step S27 of Fig. 9. In step S34, the encrypted data of 6128 bytes, namely, the 6144 byte user data is input, and the AES decryption process is performed using the block key Kb generated in step S33.

The result of decryption of the encrypted data of the 6144 byte user data becomes decrypted data 522, and is input to the playing controller 420 of Fig. 8.

A setting example (3) has the following structure:
encryption process unit (block): one sector 2048 byte user data;
data to be encrypted: the one sector 2048 byte user data without the front end portion of 16 bytes (128 bits), namely, 2032 byte data; and
block seed: 16 bytes (128 bits) of the front end portion of the one sector 2048 byte user data.

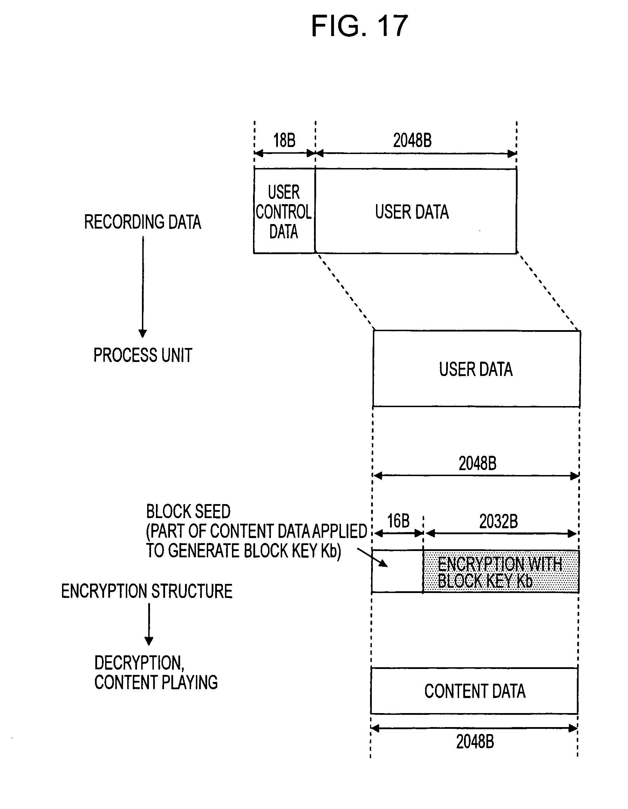

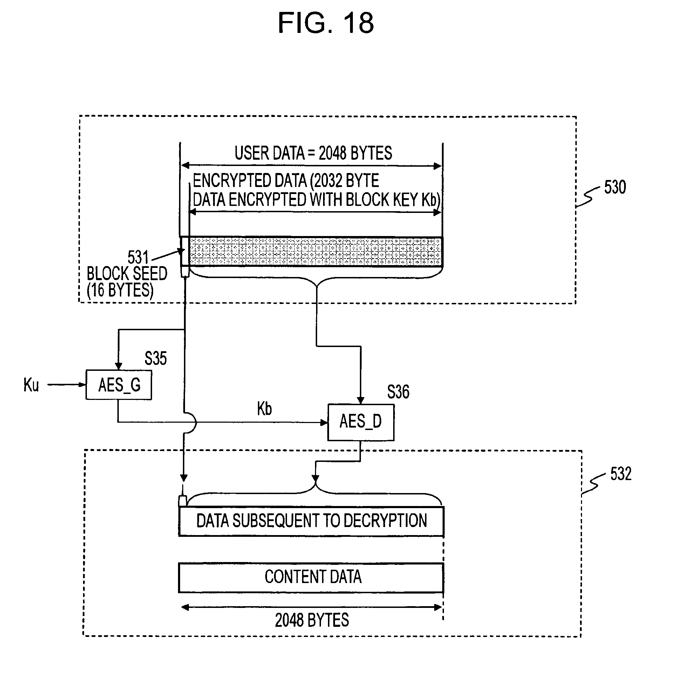

Fig. 17 illustrates the setting example (3), and Fig. 18 illustrates the decryption process of the setting example (3).

The structure of the record data in the setting example (3) is described below with reference to Fig. 17. Shown in record data in Fig. 17 are the one sector 2048 byte user data and the 18 byte user control data as one sector.

As shown in a process unit in Fig. 17, the one sector 2048 byte user data is set as one encryption process unit (block).

As shown in an encryption structure in Fig. 17, the block seed is front end 16 bytes (128 bits) of the one sector 2048 byte user data.

The content data can have any content. The data corresponding to the block seed can be any byte train. Depending on the content of the content data, the block seed can contain a byte train in a particular pattern. It is not guaranteed that the value of the block key Kb generated from the block seed is different from encryption process unit to encryption process.

The setting example (3) presents the advantage that the acquisition of the block seed, the generation of the block key, and the decryption of the content data are possible if the one sector 2048 byte data is obtained. The setting example (3) thus offers high compatibility with a system that uses data of 2048 byte unit as a process unit, such as a drive connected to a PC.

The decryption process sequence of the record data in the setting example (3) is described with reference to Fig. 18. A encryption process unit (block) 530 of Fig. 18 forms an encrypted content (CPS unit) to be stored in the information recording medium 100.

The encryption process unit 530 includes the one sector 2048 byte user data. In the setting example (3), the front end 16 bytes of the one sector 2048 byte user data is set as a block seed 531.

The information processing apparatus performing the content replaying successively acquires the encryption process units. In the selector processing step in step S25 discussed with reference to Fig. 9, the block seed 531 is separated from the remaining encrypted data of 2032 bytes. The user control data (UCD), although not shown in Fig. 18, is separated as non-encrypted data.

Step S35 of Fig. 18 corresponds to the block key Kb generation process in step S26 of Fig. 9. In step S35, an AES key generation algorithm (see Fig. 10D) is performed with the unit key Ku applied to the block seed 531 constructed of the front end 16 bytes of the one sector 2048 user data. The block key Kb thus results.

Step S36 of Fig. 18 corresponds to the decryption process in step S27 of Fig. 9. In step S36, the encrypted data of 2032 bytes without the front end 16 bytes of the one sector 2048 user data is input, and the AES decryption process is performed using the block key Kb generated in step S35.

The result of the decryption of the encrypted data of the 2048 user data without the block seed 531 of the front end 16 bytes thereof in the selector step S28 of Fig. 9 is combined with the block seed 531 to construct decrypted data 532. The decrypted data 532 is then input to the playing controller 420 of Fig. 8.

A setting example (4) has the following structure:
encryption process unit (block): one sector 2048 byte user data;
data to be encrypted: the one sector 2048 byte user data without the front end portion of 16 bytes, namely, 2032 byte data; and
block seed: 16 bytes (128 bits) of the front end portion of the one sector 2048 byte user data and containing random number.

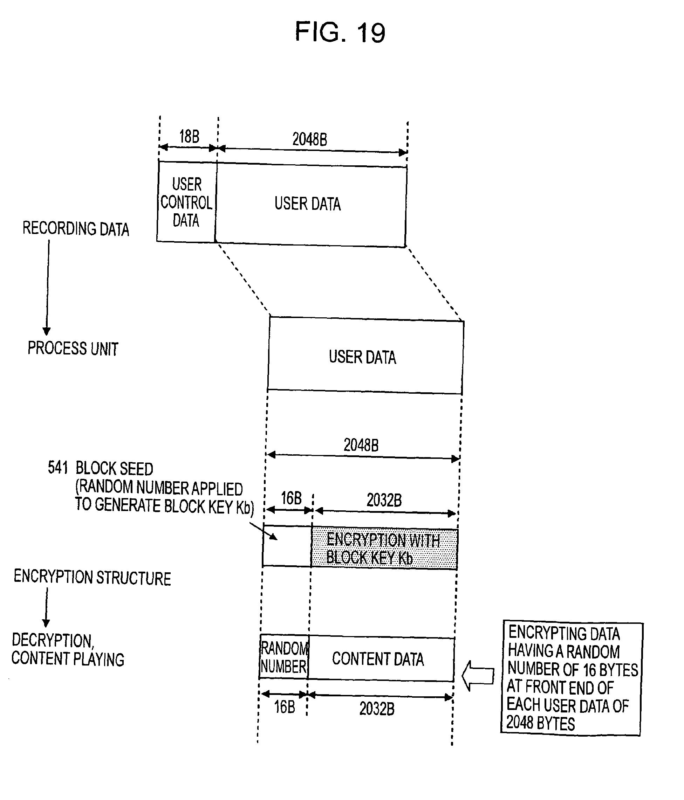

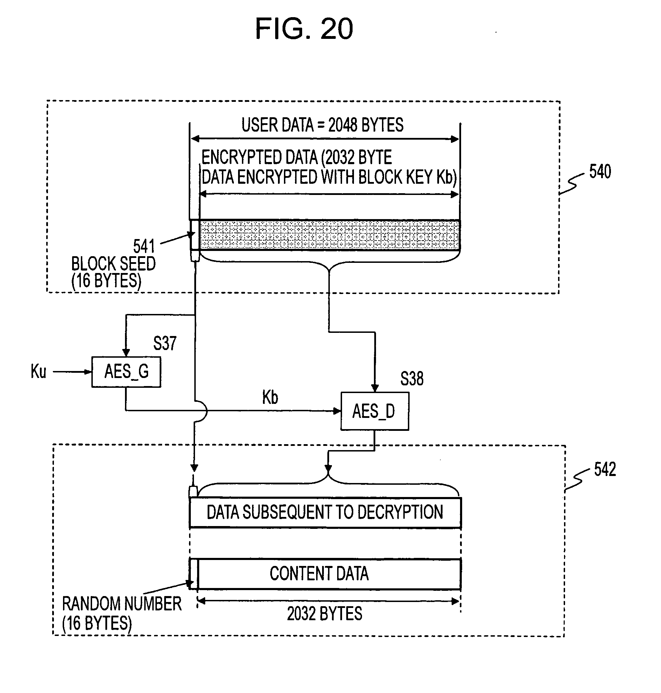

Fig. 19 illustrates the setting example (4), and Fig. 20 illustrates the decryption process of the setting example (4) .

The structure of the record data in the setting example (4) is described below with reference to Fig. 19. Shown in record data in Fig. 19 are the one sector 2048 byte user data and the 18 byte user control data as one sector.

As shown in a process unit in Fig. 19, the one sector 2048 byte user data is set as one encryption process unit (block) .

As shown in an encryption structure in Fig. 19, the block seed, namely, front end 16 bytes (128 bits) of the one sector 2048 byte user data, is a random number.

The front end 16 bytes of the 2048 byte user data used as the block seed are the random number regardless of the content of the content data. The encryption method is identical to that of the setting example (3), but the 2048 byte user data is divided into the 16 byte random number portion and the 2032 byte content data. The seed block is thus different from encryption process unit to encryption process unit. As a result, the block key Kb is different from process unit to process unit. Using the random number seed different from process unit to process unit, and the block key different from process unit to process unit, the amount of data encrypted with one key is limited to one encryption process unit, and identification of the encryption key becomes advantageously difficult. As in the setting example (3), the acquisition of the block seed, the generation of the block key, and the decryption of the content data are possible if the one sector 2048 byte data is obtained. Embodiments of the present invention can thus provides high compatibility with a system that uses data of 2048 byte unit as a process unit, such as a drive connected to a PC.

The decryption process sequence of the record data in the setting example (4) is described with reference to Fig. 20. A An encryption process unit (block) 540 of Fig. 20 forms an encrypted content (CPS unit) to be stored in the information recording medium 100.

The encryption process unit 540 includes the one sector 2048 byte user data. In the setting example (4), the front end 16 bytes of the one sector 2048 byte user data is set as a block seed 541. However, the 16 byte data is the random number rather actual data of the AV content.

The information processing apparatus performing the content replaying successively acquires the encryption process units. In the selector processing step in step S25 discussed with reference to Fig. 9, the block seed 541 is separated from the remaining encrypted data of 2032 bytes. The user control data (UCD), although not shown in Fig. 20, is separated as non-encrypted data.

Step S37 of Fig. 20 corresponds to the block key Kb generation process in step S26 of Fig. 9. In step S37, an AES key generation algorithm (see Fig. 10D) is performed with the unit key Ku applied to the block seed 531 constructed of the front end 16 bytes of the one sector 2048 user data. The block key Kb thus results.

Step S38 of Fig. 20 corresponds to the decryption process in step S27 of Fig. 9. In step S38, the encrypted data of 2032 bytes without the front end 16 bytes (random number) of the one sector 2048 user data is input, and the AES decryption process is performed using the block key Kb generated in step S37.

The result of the decryption of the encrypted data of the 2048 user data without the block seed 541 of the front end 16 bytes thereof in the selector step S28 of Fig. 9 is combined with the block seed 541 to construct decrypted data 542. The decrypted data 542 is then input to the playing controller 420 of Fig. 8.

A setting example (5) has the following structure:
encryption process unit (block): one sector 2048 byte user data and 18 byte user control data corresponding to the user data;
data to be encrypted: the one sector 2048 byte user data; and
block seed: back end 16 bytes (128 bits) of the user control data, containing a random number.

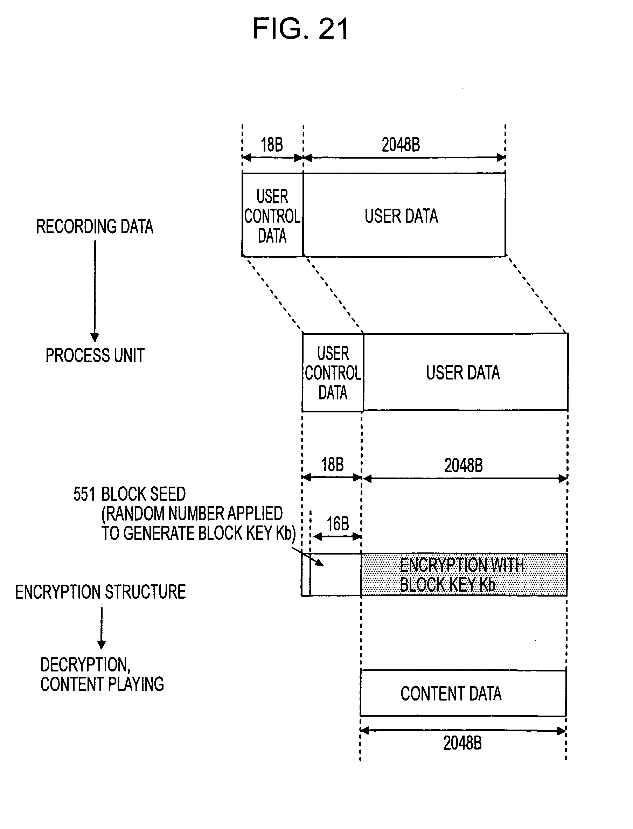

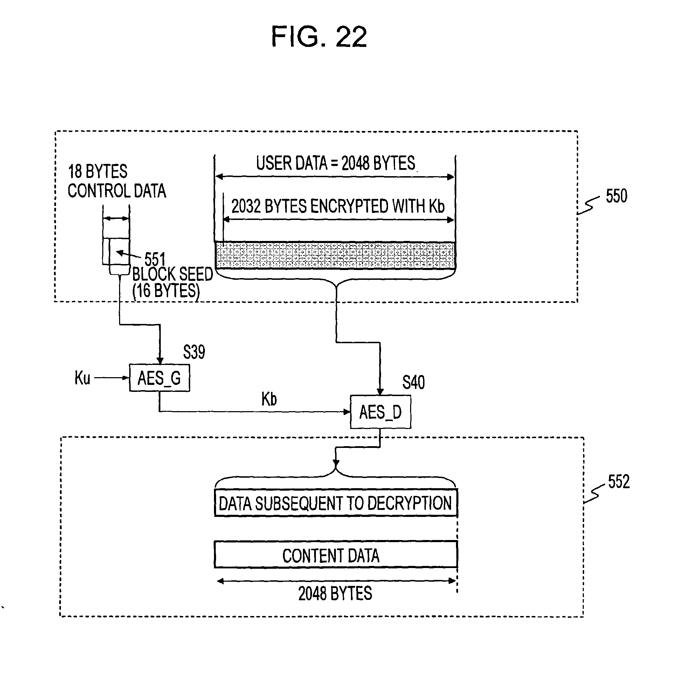

Fig. 21 illustrates the setting example (5), and Fig. 22 illustrates the decryption process of the setting example (5).

The structure of the record data in the setting example (5) is described below with reference to Fig. 21. Shown in the record data in Fig. 21 are the one sector 2048 byte user data and the 18 byte user control data as one sector.

As shown in a process unit in Fig. 21, the one sector 2048 byte user data and the 18 byte user control data corresponding to the user data are set as one encryption process unit (block).

As shown in an encryption structure in Fig. 21, 16 bytes contained in the 18 byte user control data are the block seed. Since the user control data includes an area holding any data, a random number is set in the area. The random number thus becomes a 16 byte block seed.

Since the user control data as a management data section is used for the block seed, a value different from encryption process unit to encryption process unit, such as a random number, is set regardless of the content of the content data. Since the random number different from process unit to process unit is used for the block seed, the generated block key Kb is also different in value from process unit to process unit. Using the random number block seed different from process unit to process unit, and the block key different from process unit to process unit, the amount of data encrypted with one key is limited to one encryption process unit, and identification of the encryption key becomes advantageously difficult.

The decryption process sequence of the record data in the setting example (5) is described with reference to Fig. 22. A encryption process unit (block) 550 of Fig. 22 forms an encrypted content (CPS unit) to be stored in the information recording medium 100.

The encryption process unit 550 includes the one sector 2048 byte user data and the 18 byte user control data. In the setting example (5), the 16 bytes of the 18 byte user control data is set as a block seed 551. The 16 byte data is the random number.

The information processing apparatus performing the content replaying successively acquires the encryption process units. In the selector processing step in step S25 discussed with reference to Fig. 9, the block seed 551 is separated from the remaining encrypted data of 2048 bytes.

Step S39 of Fig. 22 corresponds to the block key Kb generation process in step S26 of Fig. 9. In step S39, an AES key generation algorithm (see Fig. 10D) is performed with the unit key Ku applied to the block seed 551 constructed of the 16 byte random data of the 18 byte user control data. The block key Kb thus results.

Step S40 of Fig. 22 corresponds to the decryption process in step S27 of Fig. 9. In step S40, the one sector 2048 byte user data is input, and the AES decryption process is performed using the block key Kb generated in step S39.

The result of the decryption of the 2048 user data becomes decrypted data 552. The decrypted data 552 is then input to the playing controller 420 of Fig. 8.

A setting example (6) has the following structure:
encryption process unit (block): one sector 2048 byte user data;
data to be encrypted: the one sector 2048 byte user data; and
block seed: none.

All these pieces of data are encrypted with the unit key Ku.

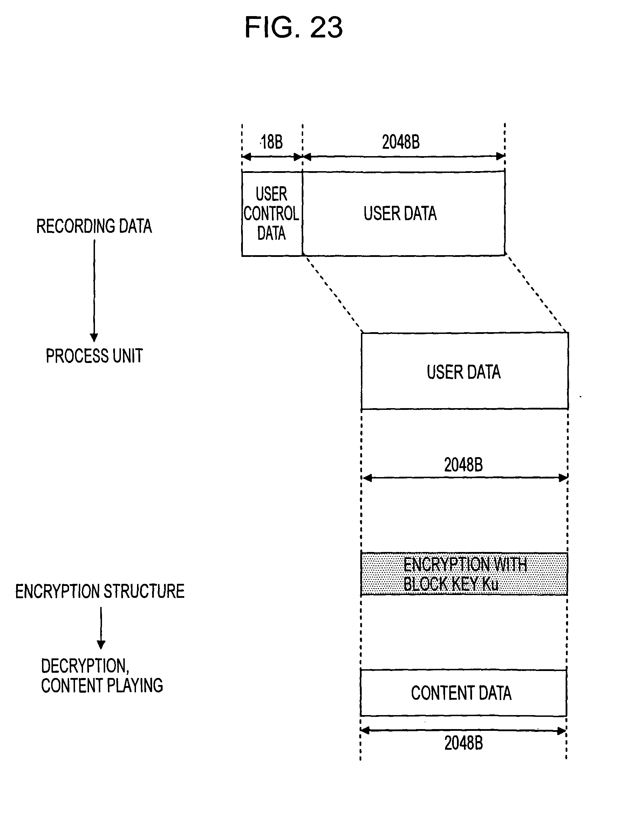

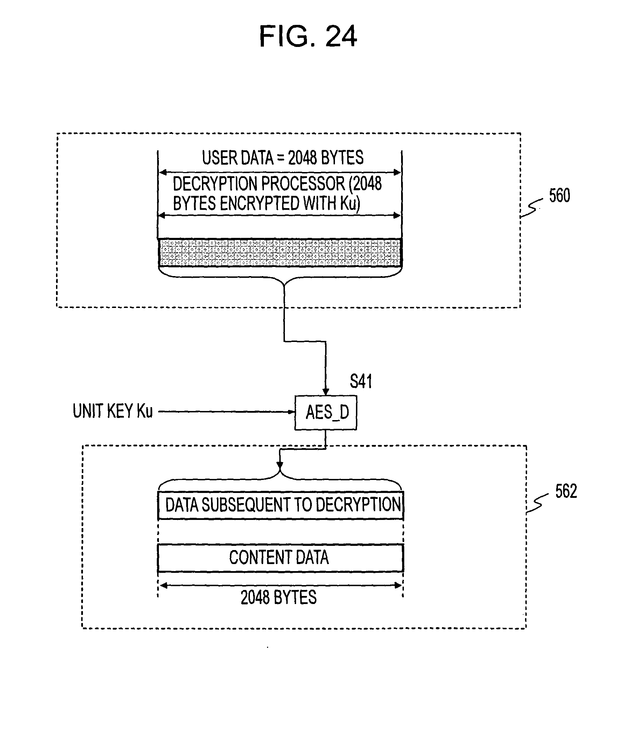

Fig. 23 illustrates the setting example (6), and Fig. 24 illustrates the decryption process of the setting example (6).

The structure of the record data in the setting example (6) is described below with reference to Fig. 23. Shown in the record data in Fig. 23 are the one sector 2048 byte user data and the 18 byte user control data.

As shown in a process unit in Fig. 23, the one sector 2048 byte user data is set as one encryption process unit (block) .

As shown in an encryption structure in Fig. 23, the one sector 2048 user data as the data to be encrypted is encrypted using the unit key Ku. In other words, without extracting the block seed and without generating the block key Kb based on the block seed, all blocks are encrypted with the unit key Ku commonly applied thereto.

The setting example (6) presents the advantage that the acquisition of the block seed, the generation of the block key, and the decryption of the content data are possible if the one sector 2048 byte data is obtained. The setting example (6) thus offers high compatibility with a system that uses data of 2048 byte unit as a process unit, such as a drive connected to a PC. Because the content data is not used as a seed, the recording medium has no portion where clear text is recorded. The block key generation operation is thus omitted, and the entire process is simplified.

Since the data contained in the same CPS unit is encrypted with the same encryption key regardless of the encryption process unit in this method, this method fails to provide the advantage of the difficulty of encryption identification enjoyed by the other methods where the encryption key is changed from encryption process unit to encryption process unit.

The decryption process sequence of the record data in the setting example (6) is described with reference to Fig. 24. An encryption process unit (block) 560 of Fig. 24 forms an encrypted content (CPS unit) to be stored in the information recording medium 100.

The encryption process unit 560 includes the one sector 2048 byte user data. In the setting example (6), no block seed is extracted, and encryption is performed on all blocks with the common unit key Ku applied thereto.

The information processing apparatus performing the content replaying successively acquires the encryption process units. In the selector processing step in step S25 discussed with reference to Fig. 9, the encrypted data of 2048 bytes is separated from the user control data as the non-encrypted data.

Step S41 of Fig. 24 corresponds to the block key Kb generation process in step S26 of Fig. 9. In step S41, the one sector 2048 byte user data is input, and an AES key decryption process is performed with the unit key Ku directly applied thereto.

The result of the decryption of the 2048 user data becomes decrypted data 562. The decrypted data 562 is then input to the playing controller 420 of Fig. 8.

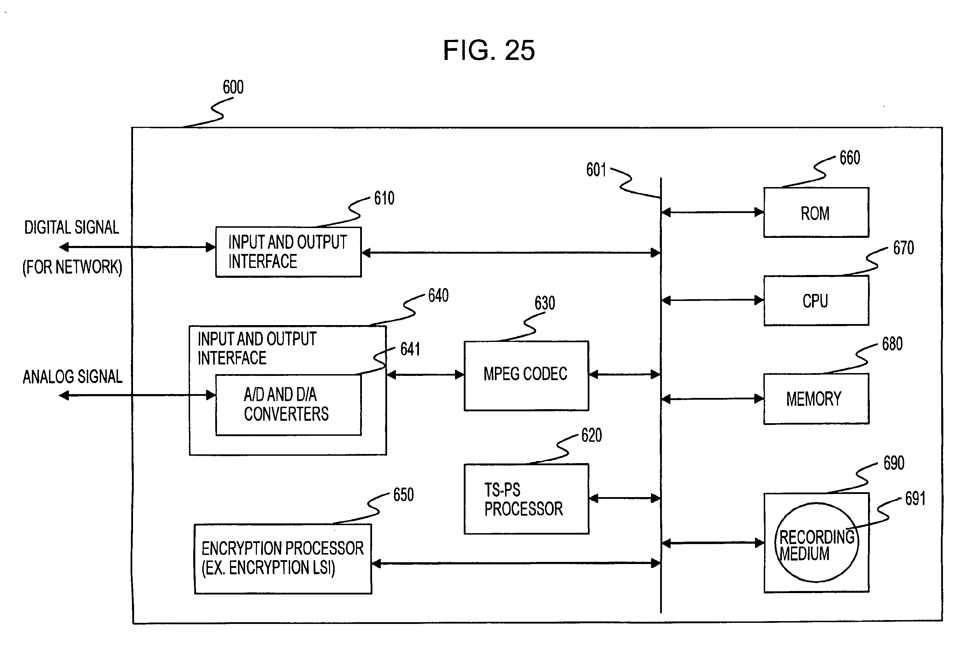

The information processing apparatus performing a recording process and/or a replay process on the above-referenced content is described below with reference to Fig. 25.

An information processing apparatus 600 includes a drive 690 for driving a information recording medium 691 to input record data to the medium 691 and to output replay data from the medium 691, a CPU 670 for processing data in accordance with a variety of programs, a ROM 660 and a memory 680 for storing the programs, parameters, etc., an input and output interface 610 for inputting and outputting digital signals, an input and output interface 640, having A/D and D/A converters 641, for inputting and outputting analog signals, an MPEG codec 630 for performing an encode process and a decode process, a TS-PS processor 620 for performing a transport stream (TS) process and a program stream (PS) process, and an encryption processor 650 for performing a variety of crypto processes, and a bus 601 connected to all these blocks.

The data recording operation of the information processing apparatus 600 will now be discussed. Two cases of data recording are contemplated. In one case, analog data is recorded, and in the other case, digital data is recorded.

Digital data, input through the input and output interface 610, is encrypted by the encryption processor 650, as necessary. The encrypted data is then stored in the information recording medium 691. To convert the input digital data in data format before storage, the MPEG codec 630, the CPU 670, and the TS-PS processor 620 convert the digital data into data in a data format for storage. The encryption processor 650 performs an appropriate encryption process on the format converted data. The encrypted data is then stored in the information recording medium 691.

An analog signal, input to the input and output interface 640, is converted into a digital signal by the analog-to-digital (A/D) converter 641. The digital signal is then converted into a code for recording by the MPEG codec 630. The TS-PS processor 620 converts the coded digital signal into AV multiplexed data in a record format. The encryption processor 650 performs an appropriate encryption process on the AV multiplexed data as necessary, before storing the data onto the information recording medium 691.

When a main content of the AV stream of MPEG-TS data is recorded, the main content is divided into content management units (CPS units). The encryption processor 650 encrypts the main content with the unit key, and records the encrypted main content on the information recording medium 691 via the drive 690.

The sub-content is also divided into content management units (CPS units) for each data group. The encryption processor 650 performs an encryption process with the unit key, and stores the encrypted sub-content on the information recording medium 691 via the drive 690.

The data replay process for replaying the data from the information recording medium is discussed below. For example, to replay the AV stream of MPEG-TS data as a main content, the data read by the drive 690 from the information recording medium 691 is recognized as the content management units (CPS units). The unit key corresponding to the content management unit is acquired.

More specifically, the RKB stored in the information recording medium is decrypted to generate the medium key Km based on the device key stored in the ROM 660 of the information processing apparatus. The encryption disk key eKm (Kd) stored in the information recording medium is decrypted with the acquired medium key Km to result in the disk key Kd. The physical index and the record seed Vu are acquired from the information recording medium. The unit key Ku is thus obtained through the encryption process based on these pieces of information.

The block key Kb is generated based on the acquired unit key Ku, as necessary. The encryption processor 650 decrypts the encrypted content with one of the block key Kb and the unit key Ku. The TS-PS processor 620 then separates the decrypted content into video data, audio data, caption data, etc.

The digital data decoded by the MPEG codec 630 is converted into an analog signal by the digital-to-analog (D/A) converter 641 in the input and output interface 640. To output a digital signal, the MPEG-TS data decrypted by the encryption processor 650 is output through the input and output interface 610 as digital data. The output is provided to a digital interface, such as an IEEE 1394 interface, an Ethernet cable, or a radio LAN. The input and output interface 610 may have a network connection function. When the replay apparatus outputs replay data in a format receivable by a target apparatus, the MPEG codec 630 performs rate conversion and codec conversion process on video, audio, and caption data separated by the TS-PS processor 620. The TS-PS processor 620 multiplexes the data into MPEG-TS data or MPEG-PS data, and outputs the multiplexed data through the input and output interface 610. The CPU 670 codec converts the data in a format other then MPEG, or converts the data into multiplexed file, and outputs the resulting data through the input and output interface 610.

When the sub-content is recognized as a content management unit, a unit key acquisition process corresponding to the content management unit is performed. Based on the acquired unit key, the encryption processor 650 decrypts the encrypted content to perform the replay process.

The content management unit (CPS unit) is set to correspond to each of data of the main content and the sub-content, and one content unit (CPS unit) is associated with one unit key. A general replay control program for generally controlling the replay operation detects the switching of the content management unit (the CPS unit), and switches the key from one to another in response to the switching of the content management unit. If the key is not acquired, a message urging the user to acquire the key is presented.

The program for performing the replay process and the recording process is stored in the ROM 660. During the execution of the program, the memory 680 is used to store parameters and data, and serves as a working area of the CPU 670. As shown in Fig. 25, the apparatus records and replays data. Embodiments of the present invention are applicable to an apparatus having a replay function only, or an apparatus having a record function only.

In accordance with one embodiment of the present invention, a content stored in an information recording medium is managed on a per unit basis and protected from unauthorized use. The content stored in the information recording medium is divided into units, and the content is encrypted with a unit key generated for each unit. A unit key generation key is generated based on a variety of key generation information. The unit key for each unit is generated by applying a record seed corresponding to each unit to the unit key generation key. For example, a block key is generated based on the unit key and a block seed per block unit set for every 3 sectors. An encryption process is performed on a per block unit basis using the block key. During decryption, the decrypting of the content is permitted conditional on the matching in the key generation information, the record seed, and the block seed stored in a disk. Unauthorized use of the content is thus prevented.

The present invention has been discussed with reference to specific embodiments thereof. It is apparent that those skilled in the art can easily perform modifications and changes on the present invention without departing from the scope of the present invention. The foregoing description of the present invention has been presented for the purpose of illustration. It is not intended to limit the invention. The scope of this invention should be determined by reference to the claims appended thereto.

The above series of process steps may be performed using hardware, software, or a combination thereof. If the series of process steps is performed using software, a computer program of process sequence may be installed from a network or a recording medium to a memory of a computer assembled into dedicated hardware, or into a general-purpose computer that performs a variety of functions by installing various programs thereon.

The computer program may be recorded beforehand in a hard disk or a ROM (Read Only Memory) as a recording medium. The computer program may be temporarily or permanently stored (recorded) on a removable recording medium such as a flexible disk, a compact disc read only memory (CD-ROM), a magneto-optical (MO) disc, a digital versatile disc (DVD), a magnetic disc, or a semiconductor memory. The removable recording medium may be supplied in so-called package software.

The computer program may be installed from the aforementioned removable recording medium to the computer, may be transferred from a download site to the computer in a wireless fashion, or may be transferred to the computer through a network such as a local area network (LAN) or the internet in a wired fashion. The computer receives the computer program thus transferred, and installs the computer program onto the hard disk thereof.

The process steps discussed in this specification are sequentially performed in the time sequence order as stated. Depending on the throughput of the apparatus or as necessary, the steps may be performed in parallel or separately. The system in this specification refers to a logical set of apparatuses, and each apparatus is not necessarily housed in a single casing.

## Claims

1. An information processing apparatus for replaying a content, comprising a crypto processor for performing a decryption process for decrypting an encrypted content containing at least one content management unit stored in an information recording medium,
wherein the crypto processor generates a unit key generation key commonly applied to at least one content management unit in accordance with key generation information stored in the information recording medium, generates a unit key corresponding to a content management unit that is encrypted in a crypto process based on the unit key generation key and a record seed corresponding to the unit-based content management unit stored in the information recording medium, and performs the decryption process on the encrypted content using one of the generated unit key and a block key that is generated based on the unit key.

2. An image processing apparatus according to claim 1, further comprising a memory for storing a device key provided in a tree-structured key distribution method, and
wherein the crypto processor acquires the key generation information by performing the decryption process on an encryption key block stored in the information recording medium using the device key.

3. An image processing apparatus according to claim 1, wherein the image processing apparatus acquires the key generation information by performing a read process for reading a physical index, recorded onto the information recording medium, using a method different from a replay method of replaying the encrypted content recorded in the information recording medium.

4. An image processing apparatus according to claim 3, wherein the image processing apparatus performs the read process for reading the physical index recorded as a wobble recording signal.

5. An image processing apparatus according to claim 1, wherein the crypto processor extracts, as a block seed, a portion of user data forming a block as an encryption process unit of contents, generates the block key in a crypto process that applies the unit key to the block seed, and performs the decryption process on a per block data unit basis in accordance with the generated block key.

6. An image processing apparatus according to claim 5, wherein the block as the encryption process unit includes the user data of at least one sector, and
wherein the crypto processor generates the block key by extracting the block seed from the user data of at least one sector, and performs the decryption process on a per block data unit basis in accordance with the generated block key.

7. An image processing apparatus according to claim 5, wherein the block seed includes random number data contained in the user data, and
wherein the crypto processor generates the block key by extracting the random number data as the block seed, and performs the decryption process on a per block data unit basis in accordance with the generated block key.

8. An image processing apparatus according to claim 1, wherein the crypto processor extracts, as a block seed, a portion of user control data from user data and the user control data, forming a block as an encryption process unit of contents, generates the block key in a crypto process that applies the unit key to the block seed, and performs the decryption process on a per block data unit basis in accordance with the generated block key.

9. An image processing apparatus according to claim 8, wherein the block as the encryption process unit includes the user data of at least one sector, and
wherein the crypto processor generates, from the user control data, the block key by extracting the block seed corresponding to the user data of at least one sector, and performs the decryption process on a per block data unit basis in accordance with the generated block key.

10. An image processing apparatus according to claim 8, wherein the block seed includes random number data contained in user control data, and
wherein the crypto processor generates the block key by extracting the random number data as the block seed, and performs the decryption process on a per block data unit basis in accordance with the generated block key.

11. An image processing apparatus according to claim 1, wherein the crypto processor performs the decryption process by commonly applying the unit key to the block as a plurality of encryption process units.

12. An information processing apparatus for performing a content recording process to an information recording medium, comprising a crypto processor for performing an encryption process every at least one content management unit that is to be recorded on the information recording medium,
wherein the crypto processor generates a unit key corresponding to each content management unit in a crypto process that is based on a unit generation key commonly applied to at least one content management unit and a record seed set for each content management unit, and performs the encryption process using one of the generated block key and a block key that is generated based on the generated unit key, thereby performing a generation process of generating encrypted data to be stored in the information recording medium.

13. An image processing apparatus according to claim 12, wherein the crypto processor sets, as a block seed, a portion of user data forming a content, generates the block key in a crypto process that applies the unit key to the block seed, and executes the encryption process on a per block data unit basis of block data in accordance with the generated block key.

14. An image processing apparatus according to claim 13, wherein the block data includes the user data of at least one sector, and
wherein the crypto processor generates the block key by extracting the block seed from the user data of at least one sector, and performs the encryption process on a per block data unit basis in accordance with the generated block key.

15. An image processing apparatus according to claim 13, wherein the block seed includes random number data contained in the user data, and
wherein the crypto processor generates the block key by extracting the random number data as the block seed, and performs the encryption process on a per block data unit basis in accordance with the generated block key.

16. An image processing apparatus according to claim 12, wherein the crypto processor extracts, as a block seed, a portion of user control data from user data and the user control data, forming a content, and generates the block key through a crypto process that applies the unit key to the block seed, thereby executing the encryption process on a per block data unit basis in accordance with the generated block key.

17. An image processing apparatus according to claim 16, wherein a block as an encryption process unit includes user data of at least one sector, and
wherein the crypto processor generates the block key by extracting, from the user control data, the block seed corresponding to the user data of at least one sector, and executes the encryption process on a per block data unit basis in accordance with the block key.

18. An image processing apparatus according to claim 16, wherein the block seed includes random number data contained in the user control data, and
wherein the crypto processor generates the block key by extracting the random number data as the block seed, and executes the encryption process on a per block data unit basis In accordance with the generated block key.

19. An image processing apparatus according to claim 12, wherein the crypto processor performs the encryption process on a content by directly and commonly applying the unit key on a block as a plurality of encryption process units.

20. An information recording medium storing an encrypted content, for storing at least one content management unit containing data encrypted by different encryption keys,
wherein the content management unit includes data that is encrypted individually using one of a unit key and a block key that is generated based on the unit key, the unit key being generated in a crypto process based on a unit generation key commonly applied to the content management units and a record seed individually set for each content management unit.

21. An information recording medium according to claim 20, wherein the content management unit includes data that is encrypted on a per block data unit basis of block data based on a block key that is generated in a crypto process, the crypto process applying the unit key to a block seed including a portion of user data forming a content.

22. An information recording medium according to claim 21, wherein the block data, arranged in the user data of at least one sector, includes data that is encrypted on a per block data unit basis in a crypto process, the crypto process applying a block key that is generated based on a block seed extracted from the user data of at least one sector.

23. An information recording medium according to claim 21, wherein the block seed includes random number data stored in a user data section.

24. An information recording medium according to claim 20, wherein the content management unit includes data that is encrypted on a per block data unit basis based on the block key generated in a crypto process, the crypto process applying the unit key to the block seed including a portion of user control data out of user data and the user control data forming a content.

25. An information recording medium according to claim 24, wherein the block data, arranged in the user data of at least one section, includes data that is encrypted on a per block data unit basis in an encryption process, the encryption process applying the block key that is generated based on the block seed extracted from the user control data corresponding to the user data of at least one sector.

26. An information recording medium according to claim 24, wherein the block seed includes random number data contained in the user control data.

27. An information recording medium according to claim 20, wherein the content management unit includes data that is encrypted by commonly and directly applying the unit key to a block as a plurality of encryption process units.

28. An information processing method for replaying a content, comprising a crypto step for performing a decryption process for decrypting an encrypted content containing at least one content management unit stored in an information recording medium,
wherein the crypto step comprises generating a unit key generation key, which is commonly applied to at least one content management unit, in accordance with key generation information stored in the information recording medium,
generating a unit key corresponding to a content management unit encrypted in a crypto process based on the unit key generation key and a record seed corresponding to the unit-based content management unit stored in the information recording medium, and
performing the decryption process on the encrypted content using one of the generated unit key and a block key that is generated based on the unit key.

29. An image processing method according to claim 28, further comprising acquiring the key generation information by performing the decryption process that applies, on an encryption key block stored in the information recording medium, a device key provided in a tree-structured key distribution method.

30. An image processing method according to claim 28, further comprising acquiring the key generation information by reading a physical index, recorded onto the information recording medium, using a method different from a replay method of replaying the encrypted content recorded in the information recording medium.

31. An image processing method according to claim 30, further comprises reading the physical index recorded as a wobble recording signal.

32. An image processing method according to claim 28, further comprising extracting, as a block seed, a portion of user data forming a block as an encryption process unit of contents, generating the block key in a crypto process that applies the unit key to the block seed, and performing the decryption process on a per block data unit basis in accordance with the generated block key.

33. An image processing method according to claim 28, further comprising extracting, as a block seed, a portion of user control data from user data and the user control data, forming a block as an encryption process unit of contents, generating the block key in a crypto process that applies the unit key to the block seed, and performing the decryption process on a per block data unit basis in accordance with the generated block key.

34. An information processing method for performing a content recording process to an information recording medium, comprising a crypto step for performing an encryption process every at least one content management unit that is to be recorded on the information recording medium,
wherein the crypto step comprises generating a unit key corresponding to each content management unit in a crypto process that is based on a unit generation key commonly applied to at least one content management unit and a record seed set for each content management unit, and
performing the encryption process, using one of the generated block key and a block key that is generated based on the generated unit key, to encrypt data to be stored in the information recording medium.

35. An image processing method according to claim 34, wherein the crypt step further comprises setting, as a block seed, a portion of user data forming a content, generating the block key in a crypto process that applies the unit key to the block seed, and executing the encryption process on a per block data unit basis of block data in accordance with the generated block key.

36. An image processing method according to claim 34, wherein the crypto step comprises extracting, as a block seed, a portion of user control data from user data and the user control data, forming a content, generating the block key through a crypto process that applies the unit key to the block seed, and executing the encryption process on a per block data unit basis in accordance with the generated block key.

37. A computer program for replaying a content, comprising a crypto step for performing a decryption process for decrypting an encrypted content containing at least one content management unit stored in an information recording medium,
wherein the crypto step comprises generating a unit key generation key, which is commonly applied to at least one content management unit, in accordance with key generation information stored in the information recording medium,
generating a unit key corresponding to a content management unit encrypted in a crypto process based on the unit key generation key and a record seed corresponding to the unit-based content management unit stored in the information recording medium, and
performing the decryption process on the encrypted content using one of the generated unit key and a block key that is generated in accordance with the unit key.

38. A computer program for performing a content recording process to an information recording medium, comprising a crypto step for performing an encryption process every at least one content management unit that is to be recorded on the information recording medium,
wherein the crypto step comprises generating a unit key corresponding to each content management unit in a crypto process that is based on a unit generation key commonly applied to at least one content management unit and a record seed set for each content management unit, and
performing the encryption process using one of the generated block key and a block key that is generated based on the generated unit key, to encrypt data to be stored in the information recording medium.
